(19) Europäisches Patentamt
European Patent Office
Office européen des brevets

(11) **EP 4 287 214 A1**

(12) **EUROPEAN PATENT APPLICATION**
published in accordance with Art. 153(4) EPC

(43) Date of publication:
06.12.2023 Bulletin 2023/49

(21) Application number: 22746083.9

(22) Date of filing: 01.02.2022

(51) International Patent Classification (IPC):
*G16Z 99/00* (2019.01)

(52) Cooperative Patent Classification (CPC):
**G16Z 99/00**

(86) International application number:
**PCT/JP2022/003796**

(87) International publication number:
**WO 2022/163864 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 01.02.2021 JP 2021014358
01.02.2021 JP 2021014359
01.02.2021 JP 2021014360

(71) Applicant: **Suntory Holdings Limited
Kita-ku, Osaka-shi
Osaka 530-8203 (JP)**

(72) Inventors:
• **KAWASAKI, Masatoshi
Kyoto 6190284 (JP)**
• **YANO, Shinjiro
Kyoto 6190284 (JP)**
• **GOTO, Nozomi
Kyoto 6190284 (JP)**

(74) Representative: **Vossius & Partner
Patentanwälte Rechtsanwälte mbB
Siebertstraße 3
81675 München (DE)**

(54) **INFORMATION PROCESSING DEVICE, WATER RESOURCE MANAGING METHOD, INFORMATION PROCESSING METHOD, AND RECORDING MEDIUM**

(57)    With an information processing apparatus 1 that includes: a calculation unit that acquires, based on values respectively applied to two or more parameters related to a state of circulation of water resources in a predetermined area, water balance calculation values regarding a balance of the water resources in the predetermined area; and an output unit that outputs information regarding the state of circulation of the water resources in the predetermined area, which is based on results of the acquisition of the water balance calculation values respectively corresponding to two or more parameter value groups in which values of at least one of the parameters are different from each other, it is possible to output information regarding the circulation of the water resources in the predetermined area.

EP 4 287 214 A1

1

INFORMATION PROCESSING APPARATUS

110

STORAGE UNIT

111

MODEL INFORMATION STORAGE UNIT

113

OBSERVATION DATA STORAGE UNIT

117

PROPERTY INFORMATION STORAGE UNIT

130 — ACCEPTANCE UNIT

160 — OUTPUT UNIT

PROCESSING UNIT — 140

EXTRACTION UNIT — 141

PARAMETER SETTING UNIT — 1411

AFTER-CHANGE CALCULATION UNIT — 1412

RANKING SETTING UNIT — 1415

CALCULATION UNIT — 151

FORMATION UNIT — 155

**FIG.3**

## Description

Technical Field

The present invention relates to an information processing apparatus, a water resource management method, an information processing method, and a recording medium that are used to perform information processing regarding water resources in a predetermined area.

Background Art

In recent years, for example, when operating facilities such as factories, awareness is required of the amount of water resources in spatial units of areas with a certain range of spatial extent, such as units of facilities or units of watersheds that include the facilities. For example, the amount of water resources in a target area is monitored, the results of the monitoring are analyzed, and the results of the analysis are used for production activities, water resource management, or water resource protection activities. For such activities, it is desirable that future projections are made, considering time scales, so that an effective plan can be formulated and appropriate operational management can be carried out.

In other words, conventionally, for example, when production activities are carried out in factories or the like, a large amount of water resources is used for, for example, boilers, raw materials, product processing, equipment cleaning, equipment cooling, equipment cleaning water for temperature control, and so on, regardless of the type of product to be produced. Examples of facilities that use water resources include facilities that own their own wells and take water therefrom, and facilities that use tap water or industrial water purchased from the government or municipalities. In either method for taking water, water resources within or near the watershed surrounding the facility are used.

Whether or not it is possible to continuously operate a facility depends on the sustainability of water resource security in the watershed surrounding the facility. In order to increase the sustainability of securing water resources, it is important not only to improve the efficiency of water resource use at the facility, but also to formulate a facility operation plan so that the impact on water resources in the watershed surrounding the facility can be reduced. Specifically, for example, in formulating a facility operation plan, it is necessary to pay close attention to various water-related indicators such as a river level, a groundwater level, and a spring water discharge. In addition, if the sustainability of securing water resources in the watershed surrounding the facility is estimated to be low, it is necessary to formulate an implementation plan for paddy field recharge activities and forest conservation activities, for example, in order to protect water resources.

By the way, it is not easy to accurately understand the behavior of water in a geosphere environment with a certain extent. Water is recharged and stored as groundwater or flows out of the area through evaporation, evapotranspiration, rainfall, snowfall, river flow, infiltration, groundwater flow, spring water, and various other processes between various systems such as the atmosphere, the ground surface, and the underground.

Therefore, in order to check the sustainability of securing water resources in units of facilities and units of watersheds that include the facilities, it is necessary to monitor the balance of the water resources within the watersheds. In addition, it is necessary to appropriately manage the flow rate, the amount of storage, and the amount of change of the water resources (hereinafter referred to as the water balance in the target area) in units of facilities and units of watersheds that include the facilities.

However, it is not realistic to grasp all parameters related to the water balance in the target area at all locations in the watersheds. In particular, if recharge amounts at sites that are difficult to access, such as mountainous areas, or groundwater flow rates, which are difficult to directly observe, are to be managed, observation values thereof cannot be acquired, and therefore it is difficult to carry out appropriate management.

Considering such problems, conventionally, water circulation models may be used for water resource management. Water circulation models make it possible to quantify the water balance in locations that are difficult to observe directly, and make it possible to manage water resources at any given location.

Water circulation models include so-called lumped models and distributed models (for example, see Non-Patent Document 1).

Lumped models are characterized by the fact that the models require less rainfall data, are relatively easy to calculate, and can be easily systematized. However, with lumped models, it is difficult to achieve high accuracy in reproducing and predicting the water cycle. Therefore, lumped models are not suitable for the purpose of managing the production capacity of a facility, for example.

On the other hand, with distributed models, the target space is divided into small meshes, and the water cycle can be reproduced according to the physical laws of the water cycle in each mesh. Therefore, it is possible to reproduce phenomena similar to the real water cycle with relatively high accuracy. That is to say, distributed models are suitable for the purpose of managing the production capacity of facilities, for example (see Non-Patent Document 2 and Non-Patent Document 3). Examples of such distributed water circulation models include those described in Patent Document 1 and Non-Patent Document 4.

Citation List

Patent Documents

Patent Document 1: JP 2011-13753A

Non-Patent Documents

Non-Patent Document 1: Nihon Suido Consultants Co., Ltd, "Bunpugata kozui yosoku moderu / Nihon Suido Consultants Co., Ltd - Uruoi aru mirai e", [online], [searched June 12, 2020], Internet <URL: http://www.nissuicon.co.jp/jigyou/kasen/kouzui-yosoku/>

Non-Patent Document 2: Hiroyuki TOSAKA, Keiji KOJIMA, Akio MIKI, and Takeshi CHINO, "Numerical Simulation of Surface-Subsurface-Coupled, 2-Phase, 3-Dimensional Fluid Behavior", Journal of groundwater hydrology, 1996, Vol. 38, No. 4, p. 253-267

Non-Patent Document 3: Koji MORI, Kazuhiro TADA, Sou SATO, Nobuko KAKIZAWA, Yoshimi UCHIYAMA, Naohide YOKOYAMA, and Masanobu YAMANE, "The 3 Dimensional Water Circulation Models for Water Source Forest Area in Kanagawa Prefecture", Bulletin of the Kanagawa Prefecture Natural Environment Conservation Center, 10(2013)215-223

Non-Patent Document 4: McDonald, Michael G. and Arlen W. Harbaugh, "A modular three-dimensional finite-difference ground-water flow model", Techniques of water-resources investigations (1984)

Summary of Invention

Technical Problem

The present invention aims to provide an information processing apparatus, an information processing method, and a recording medium for outputting information regarding the circulation of water resources in a predetermined area.

Solution to Problem

An information processing apparatus according to an aspect of the present invention is an information processing apparatus including: a calculation unit that acquires, based on values respectively applied to two or more parameters related to a state of circulation of water resources in a predetermined area, water balance calculation values regarding a balance of the water resources in the predetermined area; and an output unit that outputs information regarding the state of circulation of water resources in the predetermined area, which is based on the results of the acquisition of the water balance calculation values respectively corresponding to two or more parameter groups in which at least one of the two or more parameters is different from each other.

Advantageous Effects of Invention

According to the present invention, it is possible to provide an information processing apparatus and so on for outputting information regarding the circulation of water resources in a predetermined area.

Brief Description of Drawings

FIG. 1 is a diagram illustrating an example of a distributed water circulation model according to an embodiment of the present invention.
FIG. 2 is a flowchart illustrating the use of the distributed water circulation model according to the same.
FIG. 3 is a block diagram for an information processing apparatus according to a first embodiment of the present invention.
FIG. 4 is a flowchart showing operation related to extraction of high-impact parameters for the information processing apparatus according to the same.
FIG. 5 is a flowchart showing an example of extraction processing performed by the information processing apparatus according to the same.
FIG. 6 is a flowchart showing a water resource management method that employs the information processing apparatus according to the same.
FIG. 7 is a block diagram for an information processing apparatus according to a second embodiment of the present invention.
FIG. 8 is a flowchart showing operation related to formation and output of location information, performed by the information processing apparatus according to the same.
FIG. 9 is a flowchart showing a water resource management method that employs the information processing apparatus according to the same.
FIG. 10 is a block diagram for an information processing apparatus according to a third embodiment of the present invention.
FIG. 11 is a flowchart showing the flow of an uncertainty evaluation performed by the information processing apparatus according to the same.
FIG. 12 is a flowchart illustrating screening evaluation performed by the information processing apparatus according to the same.
FIG. 13 is a flowchart illustrating quantitative evaluation performed by the information processing apparatus according to the same.
FIG. 14 is a schematic diagram for a computer system according to the above embodiments.
FIG. 15 is a block diagram for the computer system according to the same.

FIG. 16 is a diagram illustrating vegetation distribution according to Example 1.

FIG. 17 is a diagram illustrating geologic classification according to the example.

FIG. 18 is a diagram showing a comparison between specific discharge and effective rainfall estimated from mesh normal values according to the example.

FIG. 19 is a diagram showing the concept of hydraulic conductivity setting according to the example.

FIG. 20 is a diagram illustrating results of sensitivity analysis according to the example.

FIG. 21 is a diagram illustrating effects of a management measure according to the example.

FIG. 22 is a diagram illustrating an example of display of location information according to the example.

FIG. 23 is a diagram showing a predetermined target area according to Example 2.

FIG. 24 is a diagram showing main examination steps according to the example.

FIG. 25 is a table showing data regarding weather, topography, vegetation, land use, and geology used in modeling and calculation according to the example.

FIG. 26 is a bird's-eye view of a built 3D numerical model.

FIG. 27 is a diagram illustrating positions of springs according to the example.

FIG. 28 is a diagram showing a spatial distribution of recharge amounts according to the example.

FIG. 29 is a table showing parameters subjected to sensitivity analysis and respective possible ranges of the parameters according to Example 3.

Description of Embodiments

Hereinafter, embodiments of an information processing apparatus and so on will be described with reference to the drawings. Note that the components with the same reference signs perform the same operation, and therefore redundant descriptions thereof may be omitted.

The terms used below are generally defined as follows. The meanings of these terms should not always be interpreted as indicated here, and for example, if they are individually described below, they should be interpreted considering such descriptions as well.

Examples of water resources include, but are not limited to, groundwater, river water, reservoir water such as water in lakes, and spring water.

An identifier of a certain item is a character, a code, or the like that uniquely indicates the item. Examples of codes include, but are not limited to, alphanumeric characters and other symbols. An identifier is, for example, a code string that itself does not indicate a specific meaning, but any type of information may be used as long as it can identify a corresponding item. That is to say, an identifier may be the exact name of what it indicates, or a combination of codes uniquely corresponding to what it indicates. A combination of two or more pieces of information (for example, attribute values of records recorded in a database) may be used as an identifier.

Acquisition may include acquiring items input by a user or the like, or acquiring information stored in the apparatus per se or another apparatus (information stored in advance or information generated by the apparatus performing information processing). Acquiring information stored in another apparatus may include acquiring information stored in another apparatus via an API or the like, or acquiring the content of a document file provided by another apparatus (which may be the content of a web page or the like, for example).

In addition, a so-called machine learning technique may be used to acquire information. For example, a machine learning technique may be used as follows. That is to say, a classifier that receives a specific type of input information and outputs a desired type of output information is formed using a machine learning technique. For example, two or more pairs of input information and output information are prepared in advance, the two or more pairs of information are given to a module for forming a machine learning classifier to form a classifier, and the formed classifier is stored in a storage unit. Note that a classifier can also be referred to as a learner. Note that any machine learning technique may be used, such as deep learning, random forest, SVR, or the like. Also, for machine learning, functions in various machine learning frameworks such as fastText, tinySVM, random forest, Tensor Flow, and various existing libraries may be used, for example.

Note that the classifier is not limited to one acquired through machine learning. The classifier may be, for example, a table showing correspondence between input vectors based on input information or the like and output information. If this is the case, the output information corresponding to the feature vector based on the input information may be acquired from the table, or two or more input vectors in the table and parameters for weighting the input vectors may be used to generate a vector approximating the feature vector based on input information, and the output information and parameters corresponding to the input vectors used for the generation may be used to acquire ultimate output information. In addition, the classifier may be, for example, a function representing the relationship between an input vector that is based on input information or the like and information used to generate output information. If this is the case, for example, information corresponding to a feature vector that is based on input information may be acquired using a function, and output information may be acquired using the acquired information.

Output of information is a concept including displaying on a display, projection using a projector, printing on a printer, sound output, transmission to an external apparatus, storage on a recording medium, delivery of processing results to other processing apparatus, other programs, or the like. Specifically, output includes, for example, enabling display of information on a web page, transmitting information as an e-mail or the like, and outputting information for printing.

Acceptance of information is a concept including acceptance of information input from input apparatuses such as a keyboard, a mouse, a touch panel, and so on, reception of information sent from other apparatuses via wired or wireless communication lines, and acceptance of information read from a recording medium such as an optical disc, a magnetic disc, a semiconductor memory, or the like.

Here, in the following embodiments, the information processing apparatus has the function of calculating the flow rate, the amount of change in the storage amount, and so on, of the water resources, using a distributed water circulation model that reproduces the state of circulation of water resources in a spatial unit having a certain spatial extent. The distributed water circulation model used for such functions and an example of the use thereof will be described.

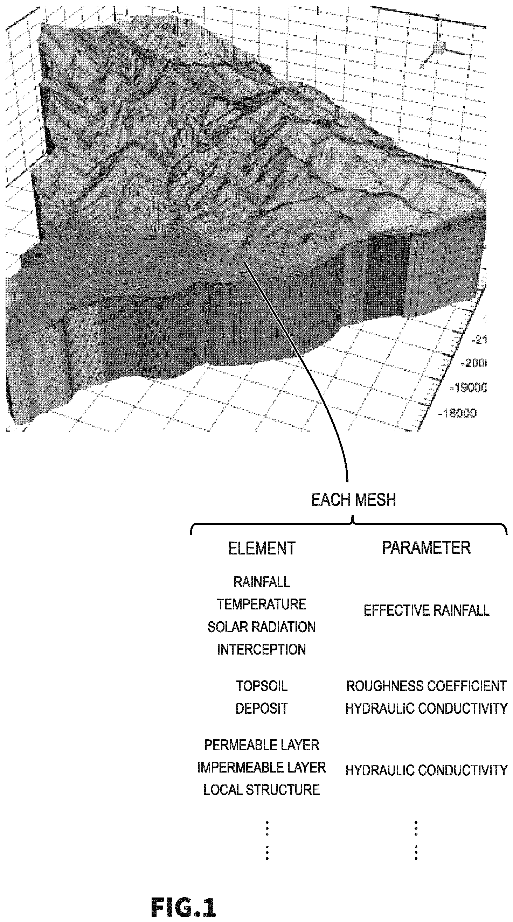

FIG. 1 is a diagram illustrating an example of a distributed water circulation model according to an embodiment of the present invention.

As shown in FIG. 1, in the following embodiments, the distributed water circulation model is a model in which the state of circulation of water resources is modeled in a predetermined area including a forest, a river, and another type of land. The predetermined area can be set, for example, in units of factories or in units of watersheds that include factories. That is to say, the predetermined area can be set in space units that each have a certain spatial extent. For example, known models such as "GETFLOWS (registered trademark)" and "MODFLOW" may be used as the distributed water circulation model, and "GETFLOWS (registered trademark)" is preferable in the following embodiments.

The distributed water circulation model is formed using a large number of meshes formed by dividing the predetermined area into a grid pattern, each mesh being associated with position information that specifies the position of the mesh, and a parameter group that includes two or more parameters applied to the mesh. For each mesh of the distributed water circulation model, the values of the parameters are set to simulate the state of circulation of water resources in the model. Examples of parameters to be set include parameters related to factors such as weather, the ground surface, a shallow layer, and a deep layer (for example, rainfall, temperature, topsoil, deposit, permeable layer, and so on), and parameters related to site-specific properties. That is to say, the parameters can be related to the governing factors that affect the state of circulation of water resources. In the following embodiments, for example, the parameter group that forms the distributed water circulation model include: a rainfall, an evapotranspiration, a temperature, a wind speed, a sunshine duration, a relative humidity, a crown cover, a plant canopy reservoir, a litter coverage, a litter storage, a snow cover-snow melt temperature, an albedo, a bulk transfer coefficient, a soil evaporation efficiency, a groundwater flow, an equivalent roughness coefficient, a hydraulic conductivity, an effective porosity, a solid-phase compressibility, a relative permeability, a capillary pressure, a fluid properties, a fluid density, an air density, a fluid viscosity coefficient, and an air viscosity coefficient. Note that the parameters are not limited to the above parameters, and may be set in various ways. Position information regarding each mesh may be information indicating a relative positional relationship with an adjacent mesh, or information indicating an absolute position such as information indicating a position in a predetermined coordinate system. Information regarding each mesh can be formed by associating position information and the values of parameters with a mesh identifier that identifies the mesh, but is not necessarily formed in this way.

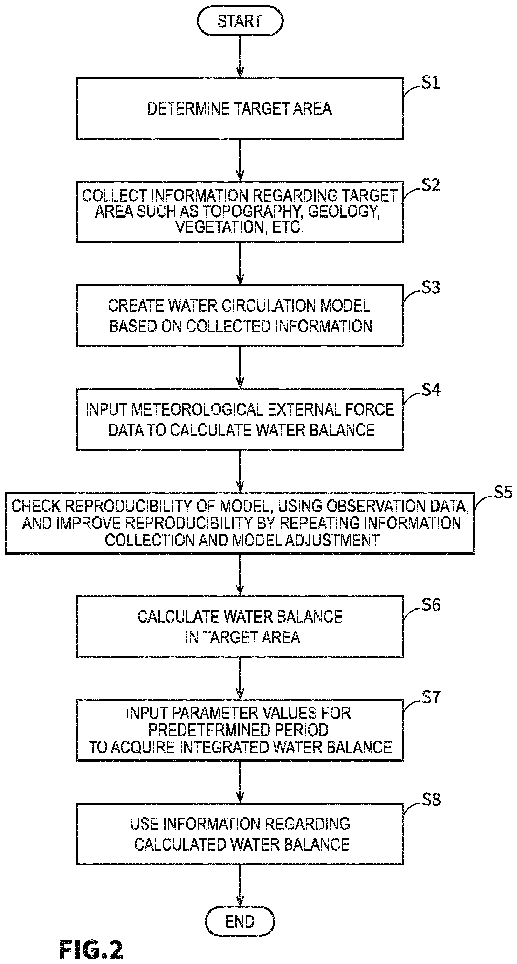

FIG. 2 is a flowchart illustrating the use of the distributed water circulation model according to the same.

Using the distributed water circulation model described above, businesses and other users can acquire information regarding the water balance for the target area. The distributed water circulation model can be used in the following flow, for example. Note that the following is merely an example, and various modifications may be made depending on the configuration and application of the distributed water circulation model.

(Step S1) First, the target area for which information regarding the water balance is to be acquired is determined. Specifically, for example, in the case of acquiring information regarding the water balance around a factory that uses water resources, a recharge area such as a mountain forest located upstream of the factory, an area where the factory takes groundwater or river water, located downstream of the recharge area, and an area located further downstream thereof may be selected as the target area.

(Step S2) Information regarding the target area such as the topography, the geology, the vegetation, and so on thereof is collected. Various methods can be used to collect information, such as the method of making explorations, and the method of researching documents, databases, or the like in which information is recorded.

(Step S3) Using the collected information, the target area is modeled as a distributed water circulation model.

(Step S4) Meteorological external force data is input to the created distributed water circulation model to calculate the water balance.

(Step S5) The reproducibility of the model is checked using observation data. In addition, information collection and model adjustment are repeated to improve reproducibility. Note that such work may be performed as necessary.

(Step S6) When the distributed water circulation model that can be used is complete up to this point, the water balance in the target area is calculated. The calculation can be performed using a computer in a well-known method, depending on the configuration of the distributed water circulation model employed.

(Step S7) Parameter values for a predetermined period are input to a distributed water circulation model to acquire an integrated water balance for the period.

(Step S8) As a result, using the calculated water balance information (water balance calculation values), it is possible to plan production activities or the like in the target area for the predetermined period.

Note that the calculation of the water balance calculation values can be performed by, for example, the processing unit of the information processing apparatus as described below, but is not limited in this way.

The use of the distributed water circulation model described above is merely an example, and various modifications may be made depending on the configuration and application of the distributed water circulation model.

In the present embodiment, the water balance calculation values relate to the flow rate or the amount of storage of the water resources in the predetermined area, or the amount of change in each. More specifically, the water balance calculation values may relate to the flow rate or the amount of storage of groundwater in the predetermined area, or the amount of change in each. That is to say, the water balance is a concept that indicates, for example, the flow rate, the amount of storage, and the amount of change of the water resources in the target area. The water balance calculation values can be calculated for each mesh, for example, and may be calculated for each specific location or for each partial area based on the calculation results for each mesh.

For example, for the purpose of managing groundwater resources, attention may be paid to the recharge amount, which is a parameter for water resource conservation, as the flow rate of the water resources. The flow rate of the water resources may include, for example, a recharge amount. In other words, in the present embodiment, it can be said that the water balance calculation values relate to the amount of recharge of groundwater in the predetermined area. Here, recharge mainly refers to the supply of water from the ground surface to the groundwater surface, and the recharge amount refers to the amount of water supplied. If attention is paid to the amount of recharge of groundwater in the predetermined area in this way, the amount of water recharged as groundwater, the amount of water flowing into a particular area as groundwater, the groundwater level, and so on can be calculated and grasped as the water balance calculation values. Note that the water balance calculation values are not limited to the above examples, and the amount related to water resources can be appropriately defined according to the purpose of grasping the water balance.

For example, for the purpose of managing ground surface water resources such as river water, attention may be paid to discharge during a drought. In such a case, the amount of water flowing out to the ground as spring water, the amount of water flowing into rivers as river water, the amount of rainfall in a forest relative to the amount of rainfall outside the forest, the outflow rate of water relative to the amount of rainfall outside the forest, and the outflow rate of water relative to the amount of rainfall in the forest, and so on can be calculated and grasped as the water balance calculation values.

In addition, for example, for the purpose of managing soil water resources, attention may be paid to soil moisture content for agriculture. In such a case, for example, the amount of water infiltrating as soil water can be calculated and grasped as water balance calculation values.

First Embodiment

In the first embodiment, the information processing apparatus extracts high-impact parameters that have a high degree of influence on the flow rate and the amount of change in the storage amount of the water resources, of the parameters that constitute the distributed water circulation model, and outputs identifiers identifying the high-impact parameters. In the present embodiment, it is preferable that the information processing apparatus outputs the high-impact parameters after ranking them in descending order of impact on the water balance such as the flow rate and the amount of change in the storage amount of the water resources.

In the present embodiment, it is preferable that each of the parameters is changed with reference to the set values of the input parameters of the distributed water circulation model whose reproducibility has been confirmed by comparing the observation data of the water cycle elements with the calculation values of the distributed water circulation model corresponding to the observation data, and the parameters are extracted in descending order of the rate at which the elements related to the water resources in the target area change due to the changes in the parameters. If this is the case, for example, it can be envisaged that the value of each parameter is changed by a predetermined rate and parameters that fluctuate by a certain rate or more are extracted, or the value of each parameter is changed within a possible range thereof and parameters that fluctuate by a certain rate or more are extracted. Note that the extracted high-impact parameters are preferably limited to those corresponding to factors that can be affected by human activities. In addition, it is preferable that the extracted high-impact parameters correspond to factors that are actually affected by human activities in the target area.

In the first embodiment, an information processing apparatus 1 can be used to specify dominant elements that have a large influence on the water balance calculation values of the water resources in a predetermined area. That is to say, using the information processing apparatus 1, the identifiers of the high-impact parameters output from the information processing apparatus 1 as follows are acquired, and the activities of changing the state of the dominant elements corresponding to the acquired identifiers in the predetermined area are performed, so that the water resources in the predetermined area can be effectively managed.

First, the configuration of the information processing apparatus 1 will be described.

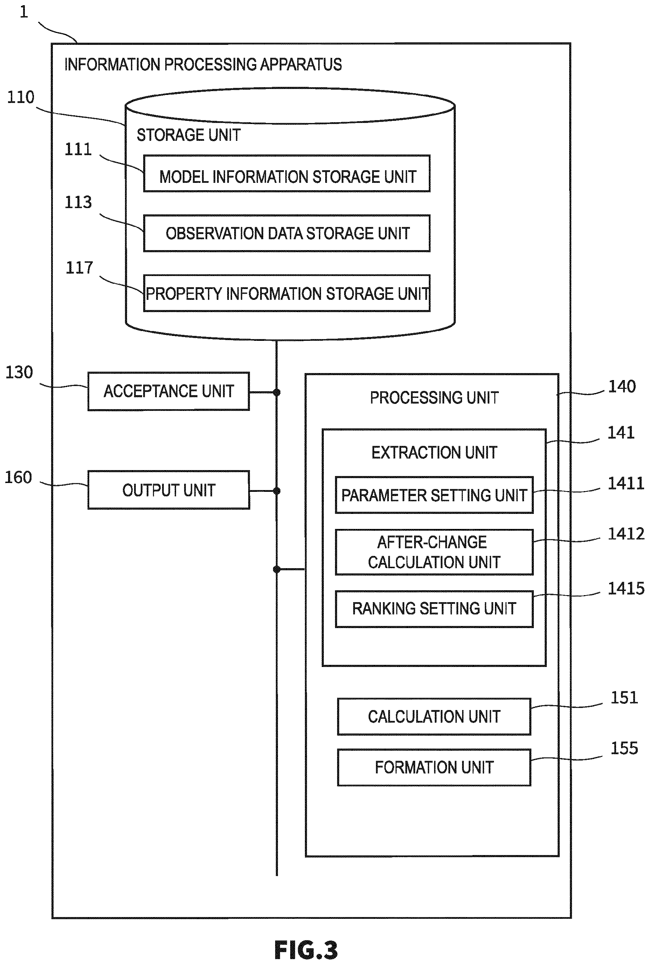

FIG. 3 is a block diagram for the information processing apparatus 1 according to the first embodiment of the present invention.

As shown in FIG. 3, the information processing apparatus 1 includes a storage unit 110, an acceptance unit 130, a processing unit 140, and an output unit 160. The information processing apparatus 1 is, for example, a personal computer, but is not limited to being it, and may be a server apparatus, a mobile information terminal, or the like. The information processing apparatus 1 may be constituted by one server, or multiple servers that operate in cooperation with each other, or a computer or the like incorporated in another device. Note that the servers may be so-called cloud servers, ASP servers, or the like, and any type of server may be used.

The storage unit 110 includes a model information storage unit 111, an observation data storage unit 113, and a property information storage unit 117. The storage 110 is preferably a non-volatile storage medium, but may also be realized with a volatile storage medium. The units in the storage unit 110 store, for example, information accepted by the acceptance unit 130 and information acquired by the processing unit 140, but information or the like to be stored in the units in the storage unit 110 and the process in which such information or the like is stored are not limited to the above examples. For example, information or the like may be stored in the storage unit 110 via a recording medium, or information or the like transmitted via a communication line or the like may be stored in the storage unit 110, or information or the like input via an input device may be stored in the storage unit 110.

The model information storage unit 111 stores information regarding a distributed water circulation model. Information regarding the distributed water circulation model includes, for example, information regarding each of the meshes that constitute the model. For example, the values of the parameters applied to the meshes are stored in the model information storage unit 111. In addition, for example, information that can specify the positions of the meshes is stored in the model information storage unit 111.

The observation data storage unit 113 stores observation data regarding various parameters for the target area. Observation data is, for example, data acquired through explorations, data acquired from an observation agency, or the like, but is not limited to these examples. Each piece of observation data is, for example, stored in association with an identifier that identifies the parameter corresponding thereto. For example, observation data related to rainfall is stored in association with identifiers of parameters indicating rainfall. Note that the observation data regarding the water resource balance may be stored in association with identifiers that identify that the observation data is data regarding the water resource balance. For example, observation data is associated with position information corresponding to observation locations, but is not limited in this way. Position information may be information indicating positions, or information that can specify the meshes corresponding thereto. In addition, for example, observation data is associated with time information indicating the times at which observation was performed, but is not limited in this way. For example, observation data may include a groundwater level, a river discharge, and so on, and is not limited to being data regarding the parameters. For example, observation data may include geospatial information such as the spatial distribution of spring water points.

The property information storage unit 117 stores information specifying parameters that have the property of being changeable according to the activities of the worker, included in the parameter group that constitute the distributed water circulation model. For example, rainfall is not dependent on worker activities. On the other hand, effective rainfall can vary depending on the number of trees, vegetation, and other controlling elements at the site, and therefore, effective rainfall is a parameter that has the property of being changeable in response to worker activities such as thinning. For each parameter, for example, a flag indicating whether or not the parameter has the property of being changeable in response to worker activities is recorded in such a property information storage unit 117 in association with an identifier that identifies the parameter. Note that the information stored in the property information storage unit 117 is stored in response to setting operations or the like from the user or t the like accepted by the acceptance unit 130 as described below, but is not limited in this way. For example, the information may be determined and stored in advance.

The acceptance unit 130 accepts, for example, information input thereto using an input means connected to the information processing apparatus 1 or information input through input operations performed using a reading apparatus (for example, a code reader) connected to the information processing apparatus 1 (including, for example, information read by the apparatus). The information thus accepted is stored in the storage unit 110, for example. Any input means such as a numeric keypad, a keyboard, a mouse, or a menu screen may be used to input information that can be accepted by the acceptance unit 130. The acceptance unit 130 can be realized using a device driver for an input means such as a numeric keypad or a keyboard, or control software for a menu screen, for example. Note that the acceptance unit 130 may also be configured to accept information such as voice input through a microphone, for example.

In the present embodiment, the acceptance unit 130 accepts a specifying operation input by a user to specify whether or not each parameter has the property of being changeable in response to worker activities. That is to say, for each of the parameters constituting the distributed water circulation model, the user can specify whether or not the parameter can be the target of worker activities in a predetermined area. Upon accepting the specifying operation, the acceptance unit 130 stores an identifier that identifies the parameter, and a flag or the like indicating whether or not the parameter has the property of being changeable in response to worker activities, in the property information storage unit 117 in association with each other. For example, the user can conduct a field survey in a predetermined area and thereafter specify information regarding the above property of each parameter.

The processing unit 140 can typically be realized using an MPU, a memory, or the like. The processing procedures performed by the processing unit 140 are typically realized using software, and the software is recorded on a recording medium such as a ROM. However, the processing unit 140 may also be realized using hardware (a dedicated circuit). The processing unit 140 performs various kinds of processing. The various types of processing are, for example, processing performed by the various units included in the processing unit 140 as described below.

In the present embodiment, the processing unit 140 includes an extraction unit 141, a calculation unit 151, and a formation unit 155.

The extraction unit 141 extracts high-impact parameters that have a larger influence on the water balance calculation values as a larger number of predetermined conditions are satisfied. The high-impact parameters are extracted from the parameter group used in the distributed water circulation model. One or more high-impact parameters may be extracted.

Here, various conditions can be set as the predetermined conditions. In the present embodiment, the extraction unit 141 judges whether or not the result of sensitivity analysis satisfies predetermined extraction conditions, for each parameter, for example. For example, a condition that the ratio of water balance calculation values before and after the value is changed is equal to or greater than a predetermined threshold value may be set as an extraction condition, if appropriate. Note that, for example, the extraction unit 141 may extract a predetermined number of (for example, one or 2 or more) high-ranking parameters in descending order of influence on the water balance calculation values as high-impact parameters according to the results of ranking by a ranking setting unit 1415 described below.

Note that, in the present embodiment, the extraction unit 141 extracts high-impact parameters from among the parameters that constitute the distributed water circulation model and that are determined to have the property of being changeable in response to worker activities. For example, the extraction unit 141 can determine that a parameter has the property of being changeable in response to worker activities, based on information stored in the property information storage unit 117. That is to say, in the present embodiment, the extraction unit 141 is configured to determine parameters specified through a specifying operation accepted by the acceptance unit 130 as parameters that can be the target of worker activities, as parameters that have the property of being changeable in response to worker activities. Note that the determination regarding whether or not parameters have the property of being changeable in response to worker activities may be performed after a sensitivity analysis regarding the influence on the water balance calculation values is performed on each parameter as described below. Alternatively, a sensitivity analysis regarding the influence on the water balance calculation values may be performed only on parameters that have the property of being changeable in response to worker activities, of the parameters.

In the present embodiment, the extraction unit 141 performs a sensitivity analysis on each parameter, regarding the influence thereof on the water balance calculation values, to extract high-impact parameters. The sensitivity analysis is performed by instructing the calculation unit 151 to acquire water balance calculation values while changing the value of each parameter.

The extraction unit 141 includes a parameter setting unit 1411, an after-change calculation unit 1412, and a ranking setting unit 1415.

The parameter setting unit 1411 acquires observation data regarding one or more parameters from the observation data storage unit 113. In addition, the parameter setting unit 1411 acquires observation data regarding the water resource balance from the observation data storage unit 113. The parameter setting unit 1411 may use identifiers that identify parameters or the water balance to acquire the observation data corresponding thereto.

The parameter setting unit 1411 sets the respective values of parameters so that the water balance calculation values calculated by the processing unit 140 using the values of the parameters corresponding to the acquired observation data and the values of other parameters correspond to the observation data regarding the acquired water resource balance. That is to say, the parameter setting unit 1411 set the respective values of the parameters so as to be reasonable values considering the observation data. For example, for parameters for which there is observation data corresponding thereto, the values corresponding to the observation data may be set, and the values of other parameters may be set within the range of possible values of the parameters, using an analysis method such as the Newton's method, so that the difference between the observed data of water balance and the water balance calculation values is within a predetermined value.

The after-change calculation unit 1412 calculates the water balance after changing the value of each of the parameters set by the parameter setting unit 1411. The water balance calculation values calculated in this way are referred to as after-change calculation values. That is to say, the after-change calculation unit 1412 acquires after-change calculation values.

In the present embodiment, the after-change calculation unit 1412 calculates the after-change calculation values after changing the value of each of the parameters set by the parameter setting unit 1411. Specifically, for example, for each parameter, the set value is increased or decreased by 1 percent, and the after-change calculation values are calculated using the after-change values. Note that the ratio of change is not limited to the above example. Also, values used to calculate the after-change calculation values may be acquired by adding or subtracting a preset amount of change to or from the set value of each parameter.

The extraction unit 141 extracts high-impact parameters based on the after-change calculation value of each parameter, calculated by the after-change calculation unit 1412. In the present embodiment, the extraction unit 141 acquires the water balance calculation value for each parameter, using the parameter group set by the parameter setting unit 1411. Thereafter, the differences between the acquired water balance calculation values and the after-change calculation values calculated by the after-change calculation unit 1412 are obtained. If the calculated difference of a parameter is equal to or greater than a predetermined threshold value, the parameter is extracted as a high-impact parameter. Note that the extraction unit 141 may extract a parameter as a high-impact parameter when the ratio between the water balance calculation value and the after-change calculation value is equal to or greater than a predetermined threshold value.

Here, In the present embodiment, the ranking setting unit 1415 compares the difference between the water balance calculation value and the after-change calculation value obtained for one parameter with that obtained for another parameter, and ranks the high-impact parameters. That is to say, the larger the difference between the water balance calculation value and the after-change calculation value is (the higher the sensitivity is), the higher the parameter is ranked as the parameter has a greater influence on the water balance calculation value. Thus, the extraction unit 141 ranks the extracted high-impact parameters in descending order of the influence thereof on the water balance calculation values. Note that information (for example, a flag) indicating whether or not a parameter has been extracted as a high-impact parameter, information indicating the result of ranking by the ranking setting unit 1415, and so on may be associated with an identifier or the like that identifies the parameter and stored in the storage unit 110.

By performing a sensitivity analysis while changing such a value for each parameter, the extraction unit 141 can acquire high-impact parameters that have a larger influence on the water balance calculation values as a larger number of predetermined conditions are satisfied, i.e., parameters that are highly responsive to the water balance. The sensitivity analysis is performed using values changed from the values set by the parameter setting unit 1411, and therefore it is possible to check the sensitivity of each parameter within a range in the vicinity of the value that the parameter is likely to actually take.

Note that the extraction unit 141 may extract high-impact parameters in the following manner, for example. That is to say, the after-change calculation unit 1412 may change the value of each parameter set by the parameter setting unit 1411 to the maximum value and the minimum value of the possible range, and acquire two after-change calculation values. If this is the case, for each parameter, the extraction unit 141 may extract the parameter as a high-impact parameter when the difference or ratio between the two after-change calculation values is equal to or greater than a predetermined threshold value. Specifically, if the ratio between the two after-change calculation values is 1 percent or greater, the parameter can be extracted as a high-impact parameter. However, the threshold value and the determination method that employs two after-change calculation values are not limited to the above example. Alternatively, for example, the sensitivity analysis may be performed based on the after-change calculation value calculated using either one of the maximum value and the minimum value of the possible range that the parameter can take, and the water balance calculation value acquired using the parameter group set by the parameter setting unit 1411.

The calculation unit 151 acquires the water balance calculation values based on the values of the applied parameter group, using the distributed water circulation model.

When the calculation unit 151 acquires the water balance calculation values, the formation unit 155 forms output data, using the water balance calculation values.

Also, in the present embodiment, when the extraction unit 141 extracts the high-impact parameters as described above, the formation unit 155 forms output data, using the identifiers that identify the high-impact parameters. The identifiers that identify the high-impact parameters may be codes that are associated with the parameters, the names per se of the parameters, or the like. Note that the formation unit 155 may form output data by sorting the identifiers of the high-impact parameters in the order corresponding to the results of the ranking by the ranking setting unit 1415 (for example, in descending order).

In the present embodiment, the output unit 160 output information by, for example, displaying information on a display device provided in the information processing apparatus 1. In the present embodiment, for example, the output unit 160 outputs output data formed by the formation unit 155. That is to say, when water balance calculation values are acquired, the output unit 160 can output the water balance calculation values. Also, in the present embodiment, when high-impact parameters are extracted, the output unit 160 outputs the identifiers that identify the extracted high-impact parameters. At this time, the output unit 160 outputs the identifiers according to the results of the ranking. Note that outputting according to the results of the ranking may mean outputting information indicating the ranks and the identifiers in association with each other, or outputting the identifiers sorted in the order according to the results of the ranking. Outputting may also mean sequentially outputting the identifiers in descending order of rank, or sequentially outputting the identifiers in ascending order of rank.

Note that, for example, the output unit 160 may be configured to output information by transmitting information to another apparatus via a network or the like, using a transmission unit or the like (not shown). The output unit 160 may be regarded as including or not including an output device such as a display or a speaker. The output unit 160 can be realized using the driver software of the output device, the driver software of the output device and the output device, or the like.

In the present embodiment, determination by the extraction unit 141 regarding whether or not each parameter has the property of being changeable in response to worker activities may be performed in the following manner, for example. That is to say, for example, the extraction unit 141 may be configured to determine, at each location, parameters related to elements located above a point at a predetermined depth from the ground surface as parameters that have the property of being changeable in response to worker activities. For example, the extraction unit 141 can perform determination in such a manner by storing each parameter in the property information storage unit 117 in association with information indicating that the parameter has the property of being changeable in response to worker activities. As a result, regarding a parameter corresponding to a dominant element that is more likely to be affected by worker activities, the user of the information processing apparatus 1 can acquire information indicating that the parameter is a high-impact parameter.

Next, an example of the flow of operation related to extraction of high-impact parameters performed by the information processing apparatus 1 will be described.

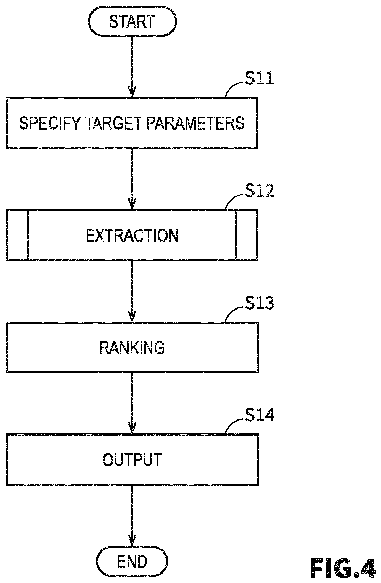

FIG. 4 is a flowchart showing operation related to extraction of high-impact parameters for the information processing apparatus 1 according to the same.

(Step S11) The processing unit 140 specifies parameters that have been determined as having the property of being changeable in response to worker activities, of the parameter group of the distributed water circulation model, i.e., two or more parameters related to the state of circulation of the water resources in a predetermined area. This operation can be performed based on the information stored in the property information storage unit 117 as described above, for example. The specified parameters are the target of a sensitivity analysis.

(Step S12) The processing unit 140 performs a sensitivity analysis on the specified parameters, and performs processing to extract high-impact parameters. The flow of extraction processing will be described later.

(Step S13) The processing unit 140 ranks the extracted high-impact parameters.

(Step S14) The predetermined unit 140 forms output data that includes the identifiers that identify the extracted high-impact parameters. Formation is performed using the results of the ranking, but is not limited in this way. Also, The output unit 160 outputs output data. Thus, the identifiers identifying the high-impact parameters are output. Thereafter, a series of processing is complete.

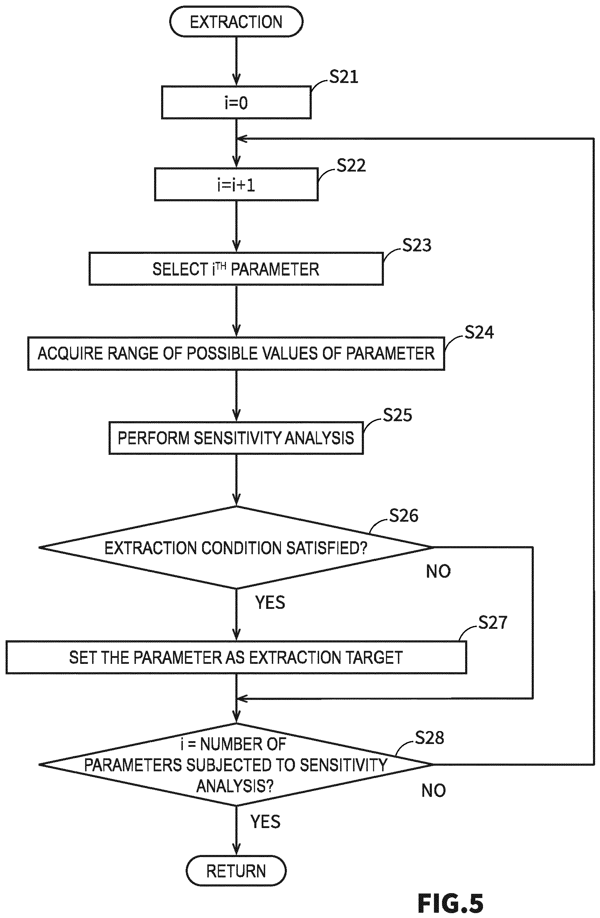

FIG. 5 is a flowchart showing an example of extraction processing performed by the information processing apparatus 1 according to the same.

(Step S21) The processing unit 140 sets zero to a counter i.

(Step S22) The processing unit 140 increments the counter i.

(Step S23) The processing unit 140 selects the $i^{th}$ parameter on which a sensitivity analysis is to be performed.

(Step S24) The processing unit 140 acquires the range of possible values of the selected parameter.

(Step S25) The processing unit 140 performs a sensitivity analysis while changing the value of the selected parameter.

(Step S26) The processing unit 140 judges whether or not the result of the sensitivity analysis satisfies a predetermined extraction condition. For example, as described above, a condition that the ratio of water balance calculation values before and after the value is changed is equal to or greater than a predetermined threshold value may be set as an extraction condition. If the extraction condition is satisfied, processing proceeds to step S27, or otherwise processing proceeds to step S28.

(Step S27) The processing unit 140 sets the selected parameter as the extraction target. That is to say, the processing unit 140 sets the selected parameter so as to be extracted as a high-impact parameter.

(Step S28) The processing unit 140 judges whether or not the counter i matches the total number of parameters on which the sensitivity analysis is to be performed. If they match, extraction processing is terminated. If they do not match, processing returns to step S22.

Note that, in the example shown in FIG. 4, the information processing apparatus 1 performs a sensitivity analysis after the parameters to be subjected to the sensitivity analysis are specified. However, the present invention is not limited in this way. For example, after extraction processing is performed, parameters that are to be output as high-impact parameters are limited to those have the property of being changeable according to worker activities. In addition, ranking processing may be performed in the process of extraction processing. If this is the case, a condition related to the result of ranking may be set as an extraction condition.

As described above, in the present embodiment, the information processing apparatus 1 performs a sensitivity analysis on each parameter to specify high-impact parameters that have a larger influence on the water balance calculation values as a larger number of predetermined conditions are satisfied, and outputs the identifiers of the high-impact parameters. Therefore, the user of the information processing apparatus 1 can use a water resource management method for managing water resources in a predetermined area, using the information processing apparatus 1.

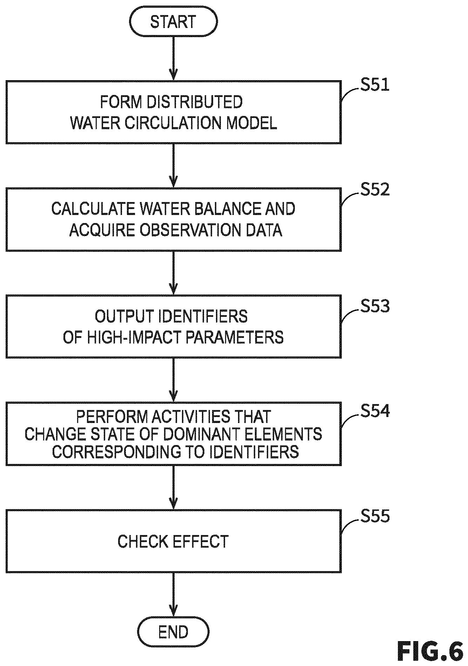

FIG. 6 is a flowchart showing a water resource management method that employs the information processing apparatus 1 according to the same.

(Step S51) First, as described above, a distributed water circulation model is formed for a predetermined target area.

(Step S52) Using the distributed water circulation model, the calculation unit 151 acquires water balance calculation values or acquire observation data so that the state of water circulation in the predetermined area is grasped.

(Step S53) In the information processing apparatus 1, the above-described processing is performed to acquire the identifiers of the high-impact parameters output from the output unit 160. Thus, it is possible to specify dominant elements that have a large influence on the water balance calculation values of the water resources in the predetermined area.

(Step S54) In the predetermined area, activities that change the state of the dominant elements corresponding to the acquired identifiers are performed. Thus, the values related to the high-impact parameters can substantially be changed. That is to say, the water resources can be managed through steps S53 and S54.

(Step S55) The effect of changing the state of the dominant elements is checked. For example, as in Step S52, water balance calculation values or observation data is acquired, and changes related to the water resource after the activities are performed in step S54 are checked.

In this way, by using the information processing apparatus 1, it is possible to easily specify the dominant elements corresponding to the high-impact parameters that have a large influence on the water balance in the predetermined area. Therefore, when water resources are to be managed, it is possible to effectively manage water resources in a predetermined area by performing activities that change the state of the dominant elements.

Note that processing according to the present embodiment may be realized using software. Such software may be distributed through software downloading or the like. Alternatively, such software may be recorded on a recording medium such a CD-ROM and distributed. Note that the software that realizes the information processing apparatus 1 according to the present embodiment is a program described below. Specifically, this program is a program that is to be executed by a computer of the information processing apparatus 1, the program enabling a processor of the information processing apparatus 1 to function as: a calculation unit that acquires, based on values respectively applied to two or more parameters related to a state of circulation of water resources in a predetermined area, water balance calculation values regarding a balance of the water resources in the predetermined area; an extraction unit that causes the calculation unit to acquire the water balance calculation values while changing the parameters, thereby performing a sensitivity analysis regarding an influence of the parameters on the water balance calculation values, to extract high-impact parameters that have a larger influence on the water balance calculation values as a larger number of predetermined conditions are satisfied; and an output unit that outputs identifiers that identify the high-impact parameters extracted by the extraction unit.

Here, in the present embodiment, the information processing apparatus 1 is configured to be able to acquire water balance calculation values in a predetermined area, using a distributed water circulation model. However, the information processing apparatus 1 may be configured to be able to acquire water balance calculation values without using a distributed water circulation model. For example, the calculation unit may be configured to be able to acquire water balance calculation values in a predetermined area, using a water circulation model, which is a so-called lumped model. Alternatively, for example, the calculation unit may be configured to be able to acquire water balance calculation values, using a classifier configured to output water balance calculation values based on the values of the parameters. Examples of such a classifier include a classifier that is acquired by using a machine learning technique, a classifier that employs a table showing the correspondence between input vectors that are based on input information or the like and output information, and a classifier that employs a function representing the relationship between input vectors that are based on input information or the like and information that is used to generate output information, and so on.

As described above, in order to sustainably carry out production activities or the like using water resources in units of facilities and in units of watersheds that include the facilities, the flow rate, the amount of storage, and the amount of change of the water resources (hereinafter referred to as the water balance in the target area) need to be appropriately managed. In order to appropriately manage the water balance in the target area, it may be necessary to carry out conservation activities for the water resources in the target area as necessary

There are many types of water resource conservation activities. That is to say, there are many indicators of dominant elements that affect the water balance, such as understory vegetation, soil, river bed, trees, surface geology, and deep geology. However, resources such as labor and cost for activities are limited, and it is difficult to carry out all conservation activities related to the dominant elements. Therefore, it is necessary to carry out effective conservation activities and efficiently manage the water resources by, for example, carrying out conservation activities preferentially on important dominant elements that are particularly likely to affect the water resources to be managed.

Conventionally, it is difficult to easily specify the important dominant elements for the water resources in each target area.

With regard to this point, according to the information processing apparatus 1 according to the present embodiment, it is possible to easily specify the important dominant elements for the water resources in each target area.

Second Embodiment

An outline of the second embodiment will be described with respect to portions different from the above-described first embodiment. In the second embodiment, as in the first embodiment, an information processing apparatus 201 that can calculate water balance calculation values using a distributed water circulation model is used. The information processing apparatus 201 is configured to be able to output information regarding the state of circulation of the water resources at each location, using water balance calculation values corresponding to the meshes.

In addition, in the second embodiment, the information processing apparatus 201 is configured to be able to reproduce the state of circulation of the water resources in grids using a distributed water circulation model, connect the results of the calculations with pieces of position information regarding the grids, and display the results as geographic information to visualize the spatial distribution, thereby specifying important locations for water resource management. Hereinafter, such an information processing apparatus 201 will be described.

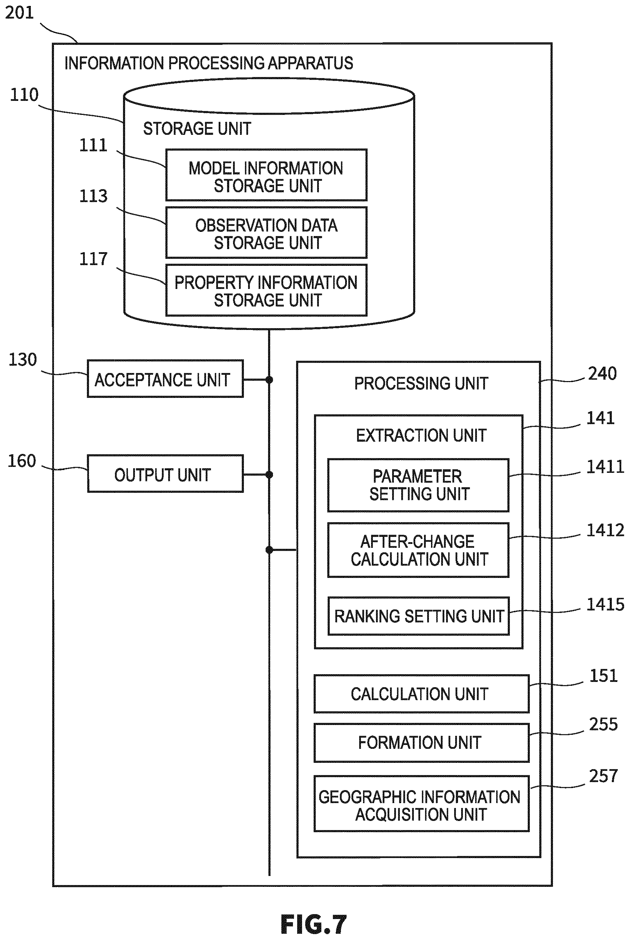

FIG. 7 is a block diagram for the information processing apparatus 201 according to the second embodiment of the present invention.

As shown in FIG. 7, the information processing apparatus 201 includes a storage unit 110, an acceptance unit 130, a processing unit 240, and an output unit 160. In the present embodiment, the processing unit 240 includes, in addition to the extraction unit 141 and the calculation unit 151, a formation unit 255 and a geographic information acquisition unit 257. Other basic configurations of the processing unit 240 are the same as those of the processing unit 140 according to the first embodiment.

In the second embodiment, the formation unit 255 forms information (hereinafter also referred to as location information) regarding the state of circulation of the water resources at each location in a predetermined area as output data, based on water balance calculation values corresponding to meshes acquired by the calculation unit 151, and pieces of position information respectively corresponding to the meshes. In the present embodiment, location information is information with which position information and water balance calculation values corresponding to the meshes are associated. That is to say, for example, location information includes pieces of position information regarding a large number of meshes in the predetermined area, and the water balance calculation values corresponding thereto. It can be said that such location information is information indicating the spatial distribution of the water balance calculation values in the predetermined area. Note that location information is not limited to including information regarding each mesh, and may include information regarding each of the locations that are divided so as to be larger than the meshes. The formation unit 255 may also be configured to calculate such location information as well, based on position information and water balance calculation values of the meshes.

In the present embodiment, location information may represent the spatial distribution of various types of water balance. For example, it is possible to employ various kinds of information such as the spatial distribution of the amounts of water infiltrating as soil water, the spatial distribution of the amounts of water recharged as groundwater, the spatial distribution of the amounts of water flowing into a specific area as groundwater, and the spatial distribution of the amounts of water flowing out to the surface as spring water, and the spatial distribution of the amounts of water flowing into the river as river water.

The geographic information acquisition unit 257 acquires geographic information that is used to visually display the shape of the predetermined area. geographic information is, for example, information that is used to display a map. Geographic information may be a two-dimensional map image, an aerial photograph, a satellite photograph, or the like of the predetermined area, or drawing information that is use to represent the shape of the predetermined area through rendering performed by predetermined software. Drawing information may represent a two-dimensional image, or may be information that makes it possible to draw a three-dimensional shape. Geographic information is, for example, but is not limited to, information stored in the storage unit 110 in advance. For example, the geographic information acquisition unit 257 may be configured to be able to acquire geographic information transmitted from an external server or the like that can communicate with the information processing apparatus 1.

In the second embodiment, the output unit 160 outputs location information formed by the formation unit 255. In the present embodiment, the output unit 160 outputs location information based on the geographic information acquired by the geographic information acquisition unit 257, so that the user can visually check the location information together with the shape of the predetermined area corresponding to the geographic information. Outputting information so that the user can visually check the information means, for example, displaying the information on a display or the like, but is not limited in this way. For example, outputting information means forming an image on paper or the like, transmitting information in order to display the information or form an image on another device, and so on. The user can easily grasp the spatial distribution of water balances by visually checking location information using the output unit 160. Note that the output unit 160 may output location information without using geographic information. Location information includes information in which position information and the water balance calculation values of each location are associated with each other. Therefore, even in this case, the user can easily grasp the spatial distribution of the water balances. Note that, even in this case, the output unit 160 may be configured to make it possible to visually check the state of the distribution of the water balance calculation values based on position information regarding each location.

When location information is output, it is preferable that location information is displayed in various display modes in different manners for each location according to the magnitude or the like of the water balance calculation value of each location. There are various examples of different display modes for different locations, such as a heat map-like image in which hues and shades differ according to the magnitude of the water balance calculation value, an example in which font sizes and weights vary according to the magnitude of the water balance calculation values in the case where the water balance calculation values are shown as numerical values, and an example in which the water balance calculation values are represented as bar graphs or the like. By outputting location information in such display modes, it is possible to enable the user to grasp the spatial distribution of the water balances more intuitively.

Here, in the present embodiment, the formation unit 255 may acquire observation data regarding the balance of water resources corresponding to one or more meshes, and form location information based on the water balance calculation values acquired by the calculation unit 151, location information, and observation data. In this case, the values of predetermined parameters calculated by the formation unit 255 based on the water balance calculation values and values of predetermined parameters that are based on observation data may be included in location information.

If location information is formed based on observation data in such a manner, for example, for locations for which observation data is available, it is possible to enable the user to grasp a more accurate spatial distribution of the water balances by outputting observation data that is more reliable than the calculated water balance values. In addition, in this case, for locations for which observation data is available, water balance calculation values and observation data may be output in association with each other. As a result, the user can easily grasp the degree of reproducibility of the distributed water circulation model, and reference it when using location information.

As described above, in the present embodiment, the user can easily grasp the spatial distribution of the water balances in the predetermined area, using location information. By checking the difference between the water balance at each location in the predetermined area and the water balances of other locations, it is easy to determine the locations to focus on when considering water resource management measures for the predetermined area.

Note that the formation unit 255 may be configured to include, in location information, information regarding the result of a comparison between the values of predetermined parameters indicating the state of circulation of the water resources at the locations, and a predetermined threshold value. Here, the values of the predetermined parameters may be water balance calculation values, aggregated water balance calculation values, or the values of other parameters. For example, the formation unit 255 may form location information by comparing the water balance calculation values with a predetermined threshold value for each mesh, and then associating the result of the comparison with the position information corresponding to the mesh. As a result of such location information being output by the output unit 160, the user can easily grasp the spatial distribution of locations where the water balance calculation values are above the threshold value (or locations where the water balance calculation values are below the threshold value). By precisely setting the threshold value according to the purpose, the user can easily determine the locations to which attention is to be paid in considering water resource management measures in the predetermined area. Even in this case, it is preferable that there are different display modes for different locations depending on whether the comparison result satisfies a predetermined condition (positive value, negative value, etc.) or on the magnitude of the comparison result.

Here, the predetermined threshold value may be a value corresponding to the average of the values of the predetermined parameter at the locations in the predetermined area, for example.

For example, location information may be information regarding the results of a comparison between the value of effective rainfall at each location and the effective rainfall per unit area of the predetermined area (i.e., the average value of effective rainfall at each location). In this case, the user can draw attention to locations where the effective rainfall value exceeds the average value as important locations in managing recharge or the like.

Alternatively, for example, location information may be information regarding the results of a comparison between the value of the river discharge at each location and the river discharge per unit watershed of the predetermined area (i.e., the average value of river discharges at each location along the river). In this case, the user can draw attention to locations where the value of the river discharge exceeds the average value as important locations in managing the river discharge.

Next, an example of the flow of operation related to formation and output of location information, performed by the information processing apparatus 201 will be described.

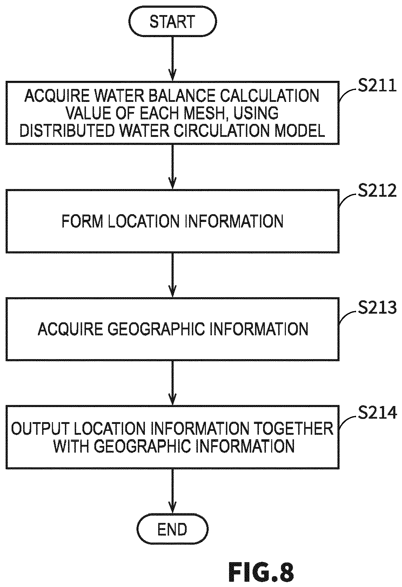

FIG. 8 is a flowchart showing operation related to formation and output of location information, performed by the information processing apparatus 201 according to the same.

(Step S211) The processing unit 240 acquires the water balance calculation value of each mesh, using the distributed water circulation model.

(Step S212) The processing unit 240 compares the water balance calculation value of each mesh with a predetermined threshold value, and forms location information by associating the result of the comparison with position information regarding the mesh. The formed location information may be stored in the storage unit 110, for example.

(Step S213) The geographic information acquisition unit 257 acquires geographic information from the storage unit 110.

(Step S214) The output unit 160 acquires location information stored in the storage unit 110, and outputs the location information on a display together with the geographic information. Thereafter, a series of processing is complete.

As described above, in the present embodiment, the information processing apparatus 201 can output location information that includes the water balance calculation value of each point and the comparison result thereof. Therefore, the user of the information processing apparatus 201 can use a water resource management method for managing water resources in a predetermined area, using the information processing apparatus 201 as follows, for example.

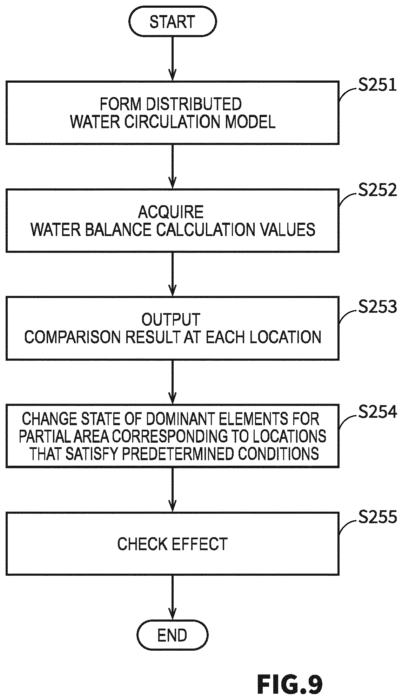

FIG. 9 is a flowchart showing a water resource management method that employs the information processing apparatus 201 according to the same.

(Step S251) First, as described above, a distributed water circulation model is formed for a predetermined target area.

(Step S252) The calculation unit 151 is caused to acquire water balance calculation values, using the distributed water circulation model.

(Step S253) In the information processing apparatus 201, the above-described processing is performed so that the output unit 160 outputs the result of a comparison between the water balance calculation value of each location and a predetermined threshold value, on a display or the like. As a result, the user can grasp important locations to which attention is to be paid in managing water resources in a predetermined area.

(Step S254) In the predetermined area, activities are performed to change the state of the dominant elements for a partial area corresponding to a location where information regarding the comparison result regarding the location satisfies a predetermined condition. For example, in an area surrounding a particular location (an example of the partial area), where the comparison result is different from other locations (an example of satisfying a predetermined condition), the state of the dominant elements affecting the water balance calculation values at the particular location is changed. As a result, the water balance calculation value of the particular location changes. That is to say, water resource management can be performed through the process from step S252 to step S254.

(Step S255) Thereafter, the effect of changing the state of the dominant elements is checked. For example, the process of step S252 and step S253 is performed again or observation data at a particular location is acquired, and changes related to water resources after the activities in step S254 are checked.

Thus, by using the information processing apparatus 201, it is possible to easily grasp the spatial distribution of water balances in a predetermined area. Therefore, when water resources are to be managed, it is possible to effectively manage water resources in a predetermined area by performing activities that change the state of the dominant elements that affect the water balance in a location to which attention is to be paid.

Note that processing according to the present embodiment may be realized using software. Such software may be distributed through software downloading or the like. Alternatively, such software may be recorded on a recording medium such a CD-ROM and distributed. Note that the software that realizes the information processing apparatus 201 according to the present embodiment is a program described below. Specifically, this program is a program that is to be executed by a computer of the information processing apparatus 201, the program enabling the computer of the information processing apparatus 201 to function as: a calculation unit that, by using a distributed water circulation model formed by modeling a state of circulation of water resources in a predetermined area, using: a large number of meshes formed by dividing the predetermined area into a grid pattern, each mesh being associated with position information that specifies a position thereof, and a parameter group that includes two or more parameters applied to each mesh, acquires water balance calculation values regarding a balance of the water resources corresponding to the meshes; a formation unit that forms information regarding the state of circulation of the water resources at each location in the predetermined area, based on the water balance calculation values corresponding to the meshes acquired by the calculation unit, and pieces of position information respectively corresponding to the meshes; and an output unit that outputs the information regarding the state of circulation of the water resources at each location in the predetermined area, formed by the formation unit.

Water resource conservation activities can be carried out at each location within the target area with respect to each of the dominant elements that affect the water balance (for example, understory vegetation, soil, river bed, trees, surface geology, deep geology, and so on). However, resources such as labor and cost for conservation activities are limited, and it is difficult to carry out conservation activities at all locations. Therefore, it is necessary to carry out effective conservation activities and efficiently manage the water resources by, for example, carrying out conservation activities preferentially at important locations for the water resources to be managed.

Conventionally, it is difficult to easily specify the important locations for the water resources in each target area. For example, it is conceivable to understand where the important locations are by conducting a field survey of the target area, but this requires a lot of man-hours and takes a long time.

Regarding this point, with to the information processing apparatus 201 according to the present embodiment, it is possible to easily identify important points in carrying out water resource conservation activities in the target area.

Third Embodiment

In the third embodiment, the information processing apparatus extracts only the values of the parameters that have a high degree of influence on the flow rate and the amount of change in the storage amount of water resources, of the values of the parameters that constitute the distributed water circulation model, and combines variables randomly sampled from the possible ranges of the plurality of extracted parameters to quantitatively calculate possible uncertainty of the flow rate of water resources. Here, when parameters are to be extracted, the flow rate, the amount of change in the amount of storage, and so on may be calculated while all parameters are varied with reference to the set values of the input parameters of the distributed water circulation model whose reproducibility has been confirmed by comparing observation data with the calculation values of the water circulation model corresponding to the observation data, and parameters may be extracted based on the results thereof. For example, when calculation values fluctuate by a certain ratio or more, the parameter may be extracted. Alternatively, for example, regarding the flow rate and the amount of change in the amount of storage of water resources calculated using the water cycle model whose reproducibility has been confirmed using observation data, if the range of fluctuations in the flow rate or the amount of change in the amount of storage, calculated using the maximum and minimum values of the possible range of a parameter is greater than or equal to a predetermined value (for example, 1 percent or greater), then the parameter may be extracted.

In the third embodiment, as in the first embodiment, an information processing apparatus 301 that can calculate water balance calculation values using a distributed water circulation model is used. Using the information processing apparatus 301, it is possible to quantify the uncertainty caused due to the uncertainty of the parameters constituting the distributed water circulation model for the water balance calculation values of the target area acquired using the distributed water circulation model. Quantification of such uncertainty can be roughly carried out in two ways: screening evaluation and quantitative evaluation. Users can use the quantified uncertainty of the water balances to plan for the use of water resources to ensure the sustainability of the environment and businesses. Specifically, for example, by using the lowest value of the possible range of the water balance calculation result acquired through quantification, it is possible to reduce the risk caused by the water balance calculation error.

In the present embodiment, the calculation of the water balance calculation values can be performed by a calculation unit 351 in a processing unit 340 of the information processing apparatus 301 as described below, but is not limited in this way. While the uncertainty of the water balance calculation values is quantified by the information processing apparatus 301, the water balance calculation values may be calculated by an apparatus different from the information processing device 301.

First, regarding the configuration of the information processing apparatus 301, portions different from the configuration of the information processing apparatus 1 will be described.

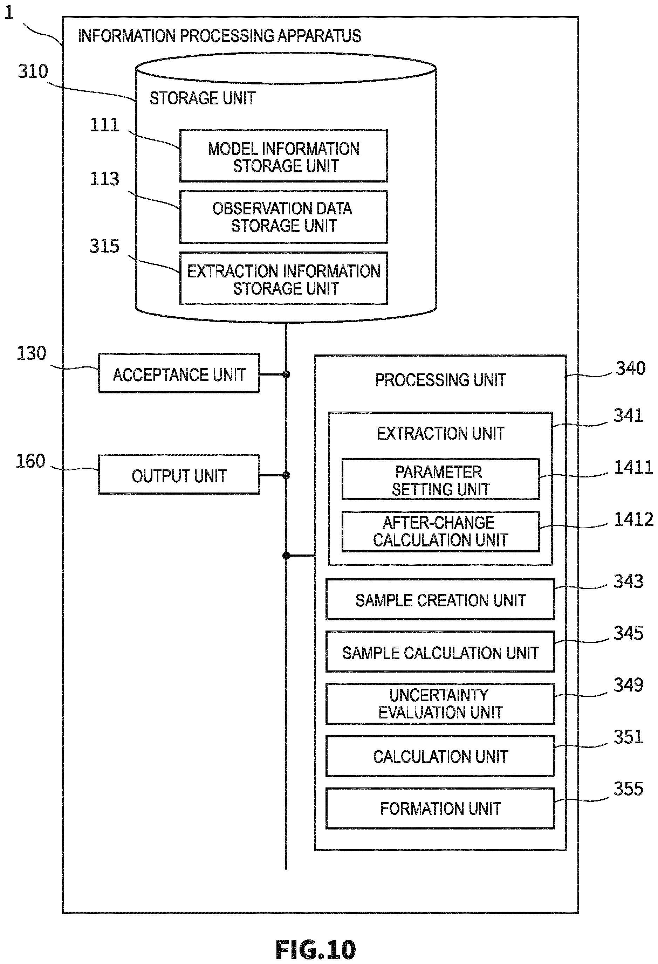

FIG. 10 is a block diagram for the information processing apparatus 301 according to the third embodiment of the present invention.

As shown in FIG. 10, the information processing apparatus 301 includes a storage unit 310, an acceptance unit 130, a processing unit 340, and an output unit 160. In the present embodiment, the storage unit 310 includes an extraction information storage unit 315 in addition to the model information storage unit 111 and the observation data storage unit 113. Other basic configurations of the storage unit 310 are the same as those of the storage unit 110 according to the first embodiment.

The extraction information storage unit 315 stores extraction information specifying parameters extracted through screening evaluation. Extraction information is, for example, identifiers that identify the extracted parameters (high-impact parameters) and an identifier that identifies the distributed water circulation model in association with each other, but is not limited to this example.

The processing unit 340 includes an extraction unit 341, a sample creation unit 343, a sample calculation unit 345, an uncertainty evaluation unit 349, a calculation unit 351, and a formation unit 355.

The extraction unit 341 extracts high-impact parameters that have a large influence on the water balance calculation values by performing screening evaluation. The high-impact parameters are extracted from the parameter group used in the distributed water circulation model. One or more high-impact parameters may be extracted. The extraction unit 341 stores extraction information that can specify the extracted high-impact parameters, in the extraction information storage unit 315.

In the present embodiment, screening evaluation is performed by performing a sensitivity analysis regarding the influence of each parameter on the water balance calculation values. The extraction unit 341 includes a parameter setting unit 1411 and an after-change calculation unit 1412. The configurations of the parameter setting unit 1411 and the after-change calculation unit 1412 are, for example, the same as the configurations of those in the first embodiment described above.

By performing a sensitivity analysis while changing such a value for each parameter, the extraction unit 341 can acquire high-impact parameters that have large influence on the water balance calculation values, i.e., parameters that are highly responsive to the water balance. The sensitivity analysis is performed using values changed from the values set by the parameter setting unit 1411, and therefore it is possible to check the sensitivity of each parameter within a range in the vicinity of the value that the parameter is likely to actually take.

Note that parameters set as extraction candidates by the extraction unit 341 (parameters to be subjected to the sensitivity analysis) may be limited. For example, parameters for which corresponding observation data can be acquired may not be subjected to the sensitivity analysis.

For example, the sensitivity analysis may be performed by assuming an equilibrium state (steady state) with effective rainfall acquired based on average weather conditions so that parameters that have a large impact on the water balance in the target area can be quickly extracted. Note that an effective porosity is an example of a parameter related to the state (non-steady state) in which weather conditions change, which is an actual phenomenon. Sensitivity regarding a parameter such as this effective porosity can be evaluated by performing a sensitivity analysis in a non-steady state after the sensitivities of other parameters have been evaluated in a steady state.

Note that the extraction unit 341 may extract high-impact parameters in the following manner, for example. That is to say, the after-change calculation unit 1412 may change the value of each parameter set by the parameter setting unit 1411 to the maximum value and the minimum value of the possible range, and acquire two after-change calculation values. If this is the case, for each parameter, the extraction unit 141 may extract the parameter as a high-impact parameter when the difference or ratio between the two after-change calculation values is equal to or greater than a predetermined threshold value. Specifically, if the ratio between the two after-change calculation values is 1 percent or greater, the parameter can be extracted as a high-impact parameter. However, the threshold value and the determination method that employs two after-change calculation values are not limited to the above example. Alternatively, for example, the sensitivity analysis may be performed based on the after-change calculation value calculated using either one of the maximum value and the minimum value of the possible range of the parameter, and the water balance calculation value acquired using the parameter group set by the parameter setting unit 1411.

The sample creation unit 343 creates two or more sample value groups including sample values within the range that each parameter can take, such that the sample values of at least one parameter are different from each other. In the present embodiment, the sample creation unit 343 creates two or more sample value groups such that the sample values of at least one high-impact parameter among the high-impact parameters extracted by the extraction unit 341 are different from each other. The sample value groups can be created by using, for example, a quantitative evaluation method such as the Monte Carlo method or the Latin hypercube sampling method. More preferably, the sample value groups for efficient quantification can be created by using the Latin hypercube sampling method. Note that the sample value groups may be created while, for each of the parameters with different values, changing the value thereof from the minimum value to the maximum value in the range of possible values thereof by a predetermined difference at a time, or created using various methods.

The sample calculation unit 345 calculates a water balance by applying each of the two or more sample value groups created by the sample creation unit 343 to the distributed water circulation model. The water balance calculation values calculated in this way are referred to as after-change calculation values. That is to say, the sample calculation unit 345 acquires sample calculation values corresponding to the sample value groups. The acquired sample calculation values are stored in the storage unit 310, for example.

The uncertainty evaluation unit 349 acquires information regarding the uncertainty of the water balance calculation values acquired using the distributed water circulation model, based on the sample calculation values corresponding to the sample value groups acquired by the sample calculation unit 345. In other words, the uncertainty evaluation unit 349 performs an uncertainty evaluation on the water balance calculation values, using the sample calculation values. For example, the uncertainty evaluation unit 349 calculates values related to the variation of the sample calculation values by performing statistical processing on two or more sample calculation values acquired using two or more sample value groups, and acquires the values as information regarding the uncertainty of the water balance calculation values. Specifically, for example, the standard deviation values calculated through statistical processing, or the values or confidence intervals acquired using them, may be acquired as information regarding uncertainty, but information regarding uncertainty is not limited to these examples.

Here, in the present embodiment, the uncertainty evaluation unit 349 acquires observation data regarding one or more parameters and the water resource balance from the observation data storage unit 113, for example. Acquisition of observation data can be performed in the same manner as the above-described method performed by the parameter setting unit 1411, but the method for acquisition is not limited to this example. The uncertainty evaluation unit 349 checks the sample value groups and the sample calculation values corresponding thereto against observation data, to confirm that the reproducibility of the sample calculation values calculated from the sample value groups with respect to the observation data is ensured. The determination that reproducibility is ensured can be made, for example, but not limited to, by determining that the difference between the pieces of observation data and the sample values and between the pieces of observation data and the sample calculation values are each within a predetermined value. The uncertainty evaluation unit 349 acquires the values related to the variation of the sample calculation values acquired through statistical processing performed using the sample calculation values of which reproducibility has been confirmed to be ensured, as information regarding uncertainty In this way, by using sample calculation values for which reliability has been confirmed by checking against observation data, it is possible to acquire information regarding the uncertainty of water balance calculation values with higher accuracy.

Note that, when performing an uncertainty evaluation on water balance calculation values of the target area, if the number of sample calculation values for the target area that abased on the water cycle model for which reproducibility has been confirmed is insufficient, it is preferable that the number of sample value groups to be generated, i.e., the number of samples is increased so that a sufficient number of sample calculation values for which reproducibility has been confirmed can be acquired. Thus, it is possible to acquire highly accurate information regarding uncertainty

The calculation unit 351 acquires the water balance calculation values based on the values of the applied parameter group, using the distributed water circulation model.

The formation unit 355 forms output data by associating the water balance calculation values acquired by the calculation unit 351 with the information regarding uncertainty acquired by the uncertainty evaluation unit 349. For example, if a 95% confidence interval has been acquired by the uncertainty evaluation unit 349 as information regarding uncertainty, the calculated water balance calculation values and the 95% confidence interval thereof can be acquired according to the output data formed by the formation unit 355. As a result of the output unit 160 or the like outputting the output data, the user of the information processing apparatus 301 can acquire quantified water balance calculation values with a confidence interval.

Next, the flow of operation for an uncertainty evaluation performed by the information processing apparatus 301 will be escribed.

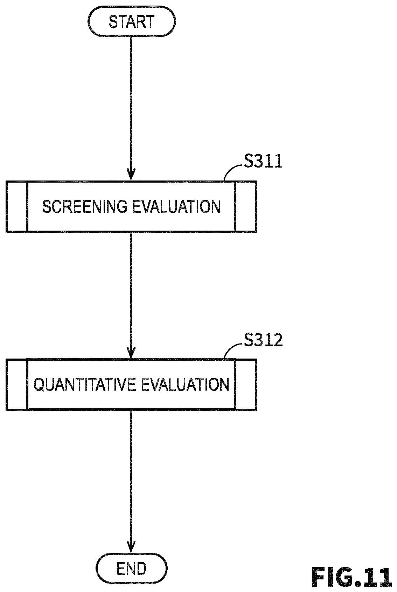

FIG. 11 is a flowchart showing the flow of an uncertainty evaluation performed by the information processing apparatus 301 according to the same.

As shown in FIG. 11, the information processing apparatus 301 performs screening evaluation on parameters (step S311), and performs quantitative evaluation on uncertainty, using the results thereof (step S312), to perform an uncertainty evaluation.

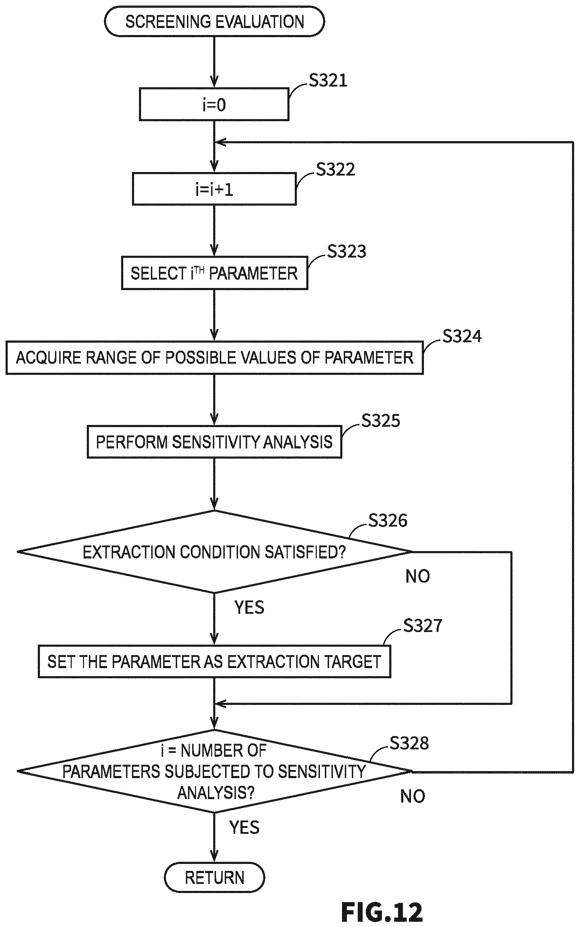

FIG. 12 is a flowchart illustrating screening evaluation performed by the information processing apparatus 301 according to the same.

(Step S321) The processing unit 340 sets zero to the counter i.

(Step S322) The processing unit 340 increments the counter i.

(Step S323) The processing unit 340 selects the $i^{th}$ parameter on which a sensitivity analysis is to be performed.

(Step S324) The processing unit 340 acquires the range of possible values of the selected parameter.

(Step S325) The processing unit 340 performs a sensitivity analysis while changing the value of the selected parameter.

(Step S326) The processing unit 340 judges whether or not the result of the sensitivity analysis satisfies a predetermined extraction condition. For example, as described above, a condition that the ratio of water balance calculation values before and after the value is changed is equal to or greater than a predetermined threshold value may be set as an extraction condition. If the extraction condition is satisfied, processing proceeds to step S327, or otherwise processing proceeds to step S328.

(Step S327) The processing unit 340 sets the selected parameter as the extraction target. That is to say, the processing unit 340 sets the selected parameter so as to be extracted as a high-impact parameter.

(Step S328) The processing unit 340 judges whether or not the counter i matches the total number of parameters on which the sensitivity analysis is to be performed. IF they match, screening evaluation is terminated. If they do not match, processing returns to step S322.

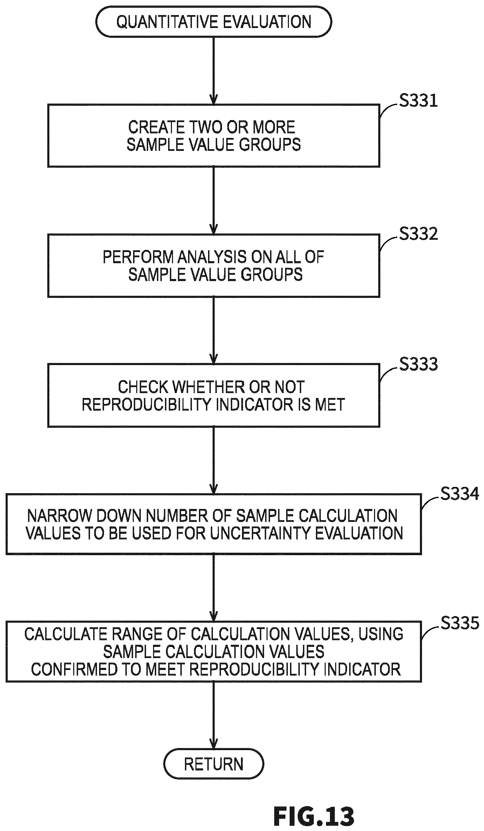

FIG. 13 is a flowchart illustrating quantitative evaluation performed by the information processing apparatus 301 according to the same.

(Step S331) The processing unit 340 creates two or more sample value groups by using, for example, the Latin hypercube sampling method.

(Step S332) The processing unit 340 performs an analysis on each of the created sample value groups, using the distributed water circulation model, to acquire sample calculation values.

(Step S333) The processing unit 340 checks whether or not each combination of sample value groups and the sample calculation values meet a reproducibility indicator based on observation data.

(Step S334) The processing unit 340 narrows down the number of sample calculation values to be used for an uncertainty evaluation, based on the result of the check regarding reproducibility.

(Step S335) Using the sample calculation values confirmed to meet the reproducibility indicator, the processing unit 340 calculates the uncertainty of the water balance calculation values, i.e., the range of possible water balance calculation values. Thereafter, the quantitative evaluation is terminated.

By performing an uncertainty evaluation in this way, it is possible to output water balance calculation values to which information representing uncertainty is added.

As described above, in the present embodiment, the information processing apparatus 301 can perform information processing method for acquiring information regarding the uncertainty of water balance calculation values regarding the balance of water resources calculated using a distributed water circulation model formed by modeling the state of circulation of the water resources in a predetermined area and by using a parameter group including two or more parameters. That is to say, the information processing apparatus 301 can carry out: a step of extracting high-impact parameters that have a high degree of influence on calculation values, from parameters; a step of creating two or more sample value groups including sample values within a range that each parameter can take such that the sample values of at least one parameter are different from each other; a step of acquiring sample calculation values related to a balance of water resources, by applying each of the two or more sample value groups to the distributed water circulation model; and a step of acquiring information regarding the uncertainty of water balance calculation values acquired using the distributed water circulation model based on the acquired sample calculation values corresponding to the sample value groups.

The information processing apparatus 301 is configured as described above, and therefore the information processing apparatus 301 can perform an uncertainty evaluation with high accuracy to acquire the water balance quantified using the distributed water circulation model for the target area.

Here, in the distributed water circulation model, the method of performing calculation processing for the uncertainty evaluation on each of the multiple parameters of each of the meshes assigned in order to reproduce a phenomenon similar to the actual water circulation requires a huge amount of calculation. Since large-scale calculation is required, it is necessary to use a computer with high computational performance equivalent to that of a supercomputer, and to operate the computer for a long time, for example.

On the other hand, in the present embodiment, a sensitivity analysis regarding the impact on the water balance calculation values is carried out to perform screening on the parameters to be used for calculation, and an uncertainty evaluation is performed using parameter groups in which the values of the extracted high-impact parameters are varied. Therefore, the amount of calculation required for the uncertainty evaluation is small, and the uncertainty evaluation can be easily performed. Specifically, it is possible to perform an uncertainty evaluation by performing calculation processing in a relatively short time, using an apparatus with a simple configuration such as a single personal computer or a small-scale computer network as the information processing apparatus 301, instead of using a computer such as a so-called supercomputer.

As described above, it is possible to quantify water balance calculation values using the information processing apparatus 301, and therefore business operators can acquire the monitoring indicator (the water balance in the target area) at any time and make necessary judgments to realize water resource management. Specifically, it becomes possible to evaluate uncertainty in a distributed water circulation model with a large number of variables, and accordingly, each business operator can acquire information that includes the results of the uncertainty evaluation in addition to the monitoring indicator (water balance in the target area) can be obtained to make the necessary judgments. As a result, each business operator can formulate and adjust a production activity plan, for example, considering the acquired information regarding the monitoring indicator, and the amount of water used by the operator itself and the state of water use in the area.

Note that processing according to the present embodiment may be realized using software. Such software may be distributed through software downloading or the like. Alternatively, such software may be recorded on a recording medium such a CD-ROM and distributed. Note that the software that realizes the information processing apparatus 301 according to the present embodiment is a program described below. That is to say, this program is a program that is to be executed by a computer of the information processing apparatus 301 that uses a distributed water circulation model formed by modeling a state of circulation of water resources in a predetermined area, using a parameter group including two or more parameters, to acquire information regarding the uncertainty of water balance calculation values regarding a balance of water resources, based on values applied to the parameters, the program enabling the computer of the information processing apparatus 301 to function as: a sample creation unit that creates two or more sample value groups including sample values within a possible range of each parameter, such that sample values of at least one parameter are different from each other; a sample calculation unit that acquires sample calculation values related to the balance of the water resources, by applying each of the two or more sample value groups created by the sample creation unit to the distributed water circulation model; and an uncertainty evaluation unit that acquires information regarding the uncertainty of the water balance calculation values acquired using the distributed water circulation model, based on the sample calculation values corresponding to the sample value groups acquired by the sample calculation unit.

In the distributed water circulation model, the amount of data required for calculation is large because the distributed water circulation model is characterized in that parameters are applied to the meshes thereof. That is to say, the mesh size is defined based on a trade-off with the amount of calculation. For example, as for meshes at a location where there are elements that cannot be directly observed such as the internal structure of the subsurface or the total spatial distribution of rainfall, it is inevitable to apply estimated values as the values of the parameters to be applied. In other words, it is impossible to apply values that are based on actual observation values to all of the parameter values of all of the meshes in a distributed water circulation model. Due to these problems, the water balance in the target area that can be quantified in a distributed water circulation model has uncertainty with respect to the actual water balance.

By performing calculations using a distributed water circulation model, it is possible to acquire a quantified water balance at any location. However, in order for business operators to make decisions based on the water balance quantified in this way, it is necessary to evaluate the uncertainty of the quantified water balance (hereinafter also referred to as an uncertainty evaluation) is required to be performed with high accuracy.

With respect to this point, the information processing apparatus 301 according to the present embodiment can perform an uncertainty evaluation with high accuracy to acquire the water balance quantified using the distributed water circulation model for the target area.

It will be understood by those skilled in the art that the first to third exemplary embodiments described above are specific examples of the following aspects.

First Aspect

An information processing apparatus according to one aspect is an information processing apparatus including: a calculation unit that acquires, based on values respectively applied to two or more parameters related to a state of circulation of water resources in a predetermined area, water balance calculation values regarding a balance of the water resources in the predetermined area; an extraction unit that causes the calculation unit to acquire the water balance calculation values while changing values of the parameters, thereby performing a sensitivity analysis regarding an influence of the parameters on the water balance calculation values, to extract high-impact parameters that have larger influence on the water balance calculation values as a larger number of predetermined conditions are satisfied; and an output unit that outputs identifiers that identify the high-impact parameters extracted by the extraction unit.

With such a configuration, it is possible to easily identify what the dominant elements are for the water resources in each target area.

An information processing apparatus according to one aspect is the information processing apparatus according to the above-described aspect, wherein the extraction unit ranks the extracted high-impact parameters in descending order of influence of the extracted high-impact parameters on the water balance calculation values, and the output unit outputs the identifiers according to results of the ranking.

With such a configuration, it is possible to identify important dominant elements for the water resources in each target area in descending order of influence on the water balance calculation values.

An information processing apparatus according to one aspect is the information processing apparatus according to the above-described aspect, wherein the extraction unit includes: a parameter setting unit that acquires observation data regarding one or more parameters and the balance of the water resources, and sets the values of the parameters corresponding to the acquired observation data and the values of the other parameters so as to correspond to the observation data regarding the balance of the water resources acquired by the water balance calculation values; and an after-change calculation unit that acquires, for each parameter, an after-change calculation value related to the balance of the water resources, after changing the value of the parameter set by the parameter setting unit, and extracts the high-impact parameters based on the after-change calculation value of each parameter calculated by the after-change calculation unit.

With such a configuration, it is possible to reliably extract parameters that are highly sensitive to the water balance calculation values.

An information processing apparatus according to one aspect is the information processing apparatus according to the above-described aspect, wherein the after-change calculation unit acquires the after-change calculation values by changing the value of each parameter by a predetermined rate, and for each parameter, the extraction unit extracts the parameter as a high-impact parameter when a difference or a ratio between a water balance calculation value acquired using the value set by the parameter setting unit and the after-change calculation value is equal to or greater than a predetermined threshold value.

With such a configuration, it is possible to reliably extract parameters that are highly sensitive to the water balance calculation values.

An information processing apparatus according to one aspect is the information processing apparatus according to the above-described aspect, wherein, for each parameter, the after-change calculation unit acquires two after-change calculation values by changing the value of the parameter to a maximum value and a minimum value of a possible range thereof, and for each parameter, the extraction unit extracts the parameter as a high-impact parameter when a difference or a ratio between the two after-change calculation values is equal to or greater than a predetermined threshold value.

With such a configuration, it is possible to reliably extract parameters that are highly sensitive to the water balance calculation values.

An information processing apparatus according to one aspect is the information processing apparatus according to the above-described aspect, wherein the extraction unit extracts the high-impact parameters from parameters determined as having a property of being changeable in response to worker activities, of the two or more parameters.

With such a configuration, it is possible to extract parameters that are highly sensitive to the water balance calculation values, from parameters that can be influenced by human activities.

An information processing apparatus according to one aspect is the information processing apparatus according to the above-described aspect, wherein the extraction unit is configured to determine parameters related to elements located above a point at a predetermined depth from a ground surface as parameters that have a property of being changeable in response to the worker activities.

With such a configuration, it is possible to extract parameters that are likely to be affected by human activities.

An information processing apparatus according to one aspect is the information processing apparatus according to the above-described aspect, further including an acceptance unit that accepts, in association with each parameter, a specifying operation that specifies whether or not the parameter can be a target of the worker activities in the predetermined area, from a user, wherein the extraction unit is configured to determine parameters specified through a specifying operation accepted by the acceptance unit, as parameters that can be the target of the worker activities, as parameters that have a property of being changeable in response to the worker activities.

With such a configuration, it is possible to extract parameters that exist on site.

An information processing apparatus according to one aspect is the information processing apparatus according to the above-described aspect, wherein the calculation unit acquires the water balance calculation values, using a distributed water circulation model that is formed using a parameter group that includes the two or more parameters by modeling the state of circulation of the water resources in the predetermined area.

With such a configuration, it is possible to easily identify what the dominant elements are for the water resources in each target area.

A water resource management method according to one aspect is a water resource management method for managing water resources in a predetermined area, including: a step of acquiring an identifier output by an output unit of an information processing apparatus in which a calculation unit is configured to acquire water balance calculation values regarding a balance of water resources in a predetermined area; and a step of changing a state of a dominant element corresponding to the acquired identifier, in the predetermined area.

With such a configuration, effective conservation activities can be carried out in each target area, and water resources can be efficiently managed.

Second Aspect

An information processing apparatus according to one aspect is an information processing apparatus including: a calculation unit that, by using a distributed water circulation model formed by modeling a state of circulation of water resources in a predetermined area, using: a large number of meshes formed by dividing the predetermined area into a grid pattern, each mesh being associated with position information that specifies a position thereof, and a parameter group that includes two or more parameters applied to each mesh, acquires water balance calculation values regarding a balance of the water resources corresponding to the meshes; a formation unit that forms information regarding the state of circulation of the water resources at each location in the predetermined area, based on the water balance calculation values corresponding to the meshes acquired by the calculation unit, and pieces of position information respectively corresponding to the meshes; and an output unit that outputs the information regarding the state of circulation of the water resources at each location in the predetermined area, formed by the formation unit.

With such a configuration, it is possible to easily specify important locations for activities to conserve the water resources in the target area.

An information processing apparatus according to one aspect is the information processing apparatus according to the above-described aspect, wherein the information regarding the state of circulation of the water resources at each location in the predetermined area includes information regarding a result of a comparison between a value of a predetermined parameter indicating the state of circulation of the water resources at each location, and a predetermined threshold value.

With such a configuration, it is possible to specify important locations more easily

An information processing apparatus according to one aspect is the information processing apparatus according to the above-described aspect, wherein the predetermined threshold value corresponds to an average of values of the predetermined parameter at the locations.

With such a configuration, it is possible to reliably specify important locations.

An information processing apparatus according to one aspect is the information processing apparatus according to the above-described aspect, wherein the information regarding the state of circulation of the water resources at each location in the predetermined area includes information regarding a result of a comparison between a value of effective rainfall at each location and effective rainfall per unit area in the predetermined area.

With such a configuration, it is possible to specify important locations more easily for the recharge amount in the predetermined area.

An information processing apparatus according to one aspect is the information processing apparatus according to the above-described aspect, wherein the information regarding the state of circulation of the water resources at each location in the predetermined area includes information regarding a result of a comparison between a value of a river discharge at each location and a river discharge per unit watershed of the predetermined area.

With such a configuration, it is possible to specify important locations more easily for the river discharge in the predetermined area.

An information processing apparatus according to one aspect is the information processing apparatus according to the above-described aspect, further including a geographic information acquisition unit that acquires geographic information that is used to visually display a shape of the predetermined area, wherein the output unit visually outputs information regarding the state of circulation of the water resources at each location in the predetermined area together with the shape of the predetermined area, based on the geographic information.

With such a configuration, it is possible to easily specify important locations using visually displayed information.

An information processing apparatus according to one aspect is the information processing apparatus according to the above-described aspect, wherein the formation unit acquires observation data regarding the balance of the water resources corresponding to one or more meshes, and forms information regarding the state of circulation of the water resources at each location in the predetermined area, based on the water balance calculation values acquired by the calculation unit, the position information, and the observation data.

With such a configuration, it is possible to specify important locations with high accuracy based on the observation data.

An information processing apparatus according to one aspect is the information processing apparatus according to the above-described aspect, wherein the information regarding the state of circulation of the water resources at each location in the predetermined area includes a value of a predetermined parameter calculated by the formation unit based on the water balance calculation values, and a value that is based on the observation data, of the predetermined parameter.

With such a configuration, it is possible to specify important locations with higher accuracy based on the observation data.

A water resource management method according to one aspect is the water resource management method according to the above-described aspect, and is a water resource management method for managing water resources in a predetermined area, including: a step of acquiring information regarding a result of a comparison output by an output unit of an information processing apparatus using a distributed water circulation model formed by modeling a state of circulation of water resources in a predetermined area; and a step of changing a state of dominant elements for a partial area of the predetermined area, the partial area corresponding to a location for which information regarding the result of the comparison of the location satisfies a predetermined condition.

With this configuration, effective conservation activities can be carried out in each target area, and water resources can be efficiently managed.

Third Aspect

An information processing apparatus according to one aspect is an information processing apparatus that uses a distributed water circulation model formed by modeling a state of circulation of water resources in a predetermined area, using a parameter group including two or more parameters, to acquire information regarding uncertainty of water balance calculation values regarding a balance of water resources, based on values applied to the parameters, a sample creation unit that creates two or more sample value groups including sample values within a possible range of each parameter, such that the sample values of at least one parameter are different from each other; a sample calculation unit that acquires sample calculation values related to the balance of the water resources, by applying each of the two or more sample value groups created by the sample creation unit to the distributed water circulation model; and an uncertainty evaluation unit that acquires information regarding uncertainty of the water balance calculation values acquired using the distributed water circulation model, based on the sample calculation values corresponding to the sample value groups acquired by the sample calculation unit.

With such a configuration it is possible to perform an uncertainty evaluation with high accuracy to acquire the water balance quantified using the distributed water circulation model for the target area.

An information processing apparatus according to one aspect is the information processing apparatus according to the above-described aspect, further including an extraction unit that performs a sensitivity analysis regarding an influence of the parameters on the water balance calculation values, to extract high-impact parameters that have a large influence on the water balance calculation values, wherein the sample creation unit creates the two or more sample value groups such that sample values of at least one high-impact parameter of the high-impact parameters extracted by the extraction unit are different from each other.

With such a configuration, it is possible to easily perform an uncertainty evaluation.

An information processing apparatus according to one aspect is the information processing apparatus according to the above-described aspect, wherein the uncertainty evaluation unit acquires observation data regarding one or more parameters and the balance of water resources, checks the sample value groups and the sample calculation values corresponding thereto against observation data, to confirm that reproducibility is ensured, and acquires values related to variation of the sample calculation values acquired through statistical processing performed using the sample calculation values of which reproducibility has been confirmed to be ensured, as the information regarding uncertainty.

With such a configuration, it is possible to perform an uncertainty evaluation with higher accuracy.

An information processing apparatus according to one aspect is the information processing apparatus according to the above-described aspect, further including a formation unit that forms output data by associating the water balance calculation values acquired by the calculation unit and the information regarding uncertainty acquired by the uncertainty evaluation unit with each other.

With such a configuration, it is possible to output water balance calculation values quantified with the evaluated uncertainty.

An information processing apparatus according to one aspect is the information processing apparatus according to the above-described aspect, wherein the water balance calculation values relate to a flow rate or an amount of storage of the water resources in the predetermined area, or an amount of change in each.

With such a configuration, it is possible to acquire the flow rate or the amount of storage of the water resources quantified with the evaluated uncertainty, or the amount of change in each.

An information processing apparatus according to one aspect is the information processing apparatus according to the above-described aspect, wherein the water balance calculation values relate to a flow rate or an amount of storage of groundwater in the predetermined area, or an amount of change in each.

With such a configuration, it is possible to acquire the flow rate or the amount of storage of groundwater quantified with the evaluated uncertainty, or the amount of change in each.

An information processing apparatus according to one aspect is the information processing apparatus according to the above-described aspect, wherein the water balance calculation values relate to an amount of recharge of groundwater in the predetermined area.

With such a configuration, it is possible to acquire the amount of recharge of groundwater quantified with the evaluated uncertainty.

Other Descriptions

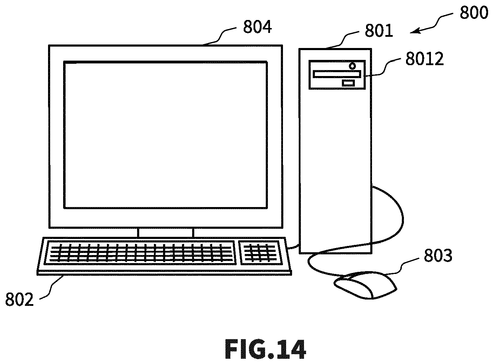

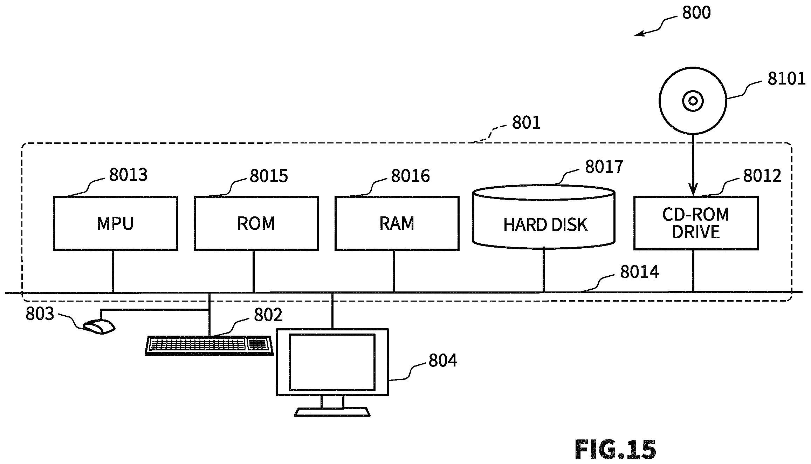

FIG. 14 is a schematic diagram for a computer system 800 according to the above embodiments. FIG. 15 is a block diagram for the computer system 800 according to the same.

These figures show a configuration of a computer that realizes the information processing apparatus and so on according to the above embodiments by executing the program described herein. The above-embodiments are realized by a computer hardware and a computer program executed thereon.

The computer system 800 includes a computer 801 that includes a CD-ROM drive, a keyboard 802, a mouse 803, and a monitor 804.

The computer 801 includes, in addition to a CD-ROM drive 8012, an MPU 8013, a bus 8014 that is connected to the CD-ROM drive 8012 and so on, a ROM 8015 for storing programs such as a boot-up program, a RAM 8016 that is connected to the MPU 8013 and is used to temporarily store application program instructions and provide a temporary storage space, and a hard disk 8017 for storing application programs, system programs, and data. Here, although not shown in the drawings, the computer 801 may further include a network card that provides connection to a LAN.

The program that enables the computer system 800 to perform the functions of the health support device A and so on according to the above-described embodiments may be stored in the CD-ROM 8101, inserted into the CD-ROM drive 8012, and furthermore transferred to the hard disk 8017. Alternatively, the program may be transmitted to the computer 801 via a network (not shown) and stored on the hard disk 8017. The program is loaded into the RAM 8016 when the program is to be executed. The program may be directly loaded from the CD-ROM 8101 or the network.

The program does not necessarily have to include an operating system (OS), a third-party program, or the like that enables the computer 801 to perform the functions of the information processing apparatus and so on according to the above-described embodiments. The program need only contain the part of the instruction that calls an appropriate function (module) in a controlled manner to achieve a desired result. How the computer system 800 works is well known and the detailed descriptions thereof will be omitted.

In the above-described program, the step of transmitting information, the step of receiving information, and so on do not include processing performed by hardware, such as processing performed by a modem or an interface card in the step of transmitting (processing that can only be performed by hardware).

There may be a single or multiple computers executing the above-described program. That is to say, centralized processing or distributed processing may be performed.

Also, in each of the above-described embodiments, two or more constituent elements that are present in one apparatus may be physically realized using one medium.

In the foregoing embodiments, each process (each function) may be realized as centralized processing using a single apparatus (system), or may be realized as distributed processing using multiple apparatuses (in this case, the entire system constituted by multiple apparatuses that perform distributed processing may be regarded as one "apparatus").

Furthermore, in the foregoing embodiments, information transmission performed between constituent elements may be such that, for example, if two constituent elements for transmitting information are physically different from each other, the transmission is performed by one of the constituent elements outputting the information and the other constituent element accepting the information, or alternatively, if two constituent elements for transmitting information are physically the same, the transmission is performed by shifting from a processing phase corresponding to one of the constituent elements to a processing phase corresponding to the other constituent element.

Furthermore, in the forgoing embodiments, information related to the processing that is performed by each constituent element, for example, information that is to be accepted, acquired, selected, generated, transmitted, or received by each constituent element, information such as a threshold value, a numerical expression, or an address used by each constituent element in the processing and the like may be retained in an unshown recording medium temporarily or for a long period of time even if not specified in the description above. Furthermore, the information may be accumulated in the unshown recording medium by each constituent element or by an unshown accumulating unit. Furthermore, the information may be read from the unshown recording medium by each constituent element or by an unshown reading unit.

Furthermore, in the foregoing embodiments, if information used by each constituent element or the like, for example, information such as a threshold value, an address, or various setting values used by each constituent element in the processing may be changed by a user, the user may be or may not be allowed to change such information as appropriate even if not specified in the description above. If the user is allowed to change such information, the change may be realized by, for example, an unshown accepting unit that accepts a change instruction from the user and an unshown changing unit that changes information according to the change instruction. The unshown accepting unit may accept the change instruction, for example, by accepting information from an input device, by receiving information transmitted via a communication line, or by accepting information read from a predetermined recording medium. Furthermore, various modifications such as addition, deletion, modification, and order change of the steps may be made in the processing and procedures shown in the flowcharts above.

The present invention is not limited to the above embodiments, and various modifications may be made, which are also included within the scope of the present invention. Also, some of the constituent elements and functions of the above embodiments may be omitted.

An embodiment may be formed by appropriately combining the multiple embodiments described above. For example, instead of employing the configurations of the above-described embodiments themselves, it is possible to replace or combine constituent elements of an embodiment described above with constituent elements of another embodiment as appropriate. Also, some of the constituent elements and functions of the above embodiments may be omitted. For example, the second embodiment may be configured so that the identifiers of the high-impact parameters can be output as in the first embodiment.

In addition, the configuration and technique as shown in the third embodiment of the present invention are not limited to applications related to the evaluation of the uncertainty of the calculation values regarding water resources. The configuration and technique can be used in evaluating the uncertainty of various quantities, such as resources, contaminants, or heat, for example.

Example 1

Hereinafter, one example of the present invention will be described in detail based on an experimental example, but the present invention is not limited thereto.

Example 1 shows that the effects can be achieved by creating a water circulation model that reproduces the state of circulation of water resources in a spatial unit that has a certain spatial extent, setting a management indicator for the amount of recharge of groundwater in the elementary process of water resources, and managing the indicator.

The target area is a predetermined area in Gifu prefecture. In this area, a management indicator was set for the amount of recharge of groundwater in the elementary process of water resources, and the effects was checked by managing the indicator.

First, a distributed water circulation model was created. An area including approximately 250 ha and approximately 374 ha in the southeastern part of Gifu Prefecture was extracted from the Whole Japan hydrological water cycle model built by Geosphere Environmental Technology Corp., and the planar grid was subdivided into pieces of 100 m. The period covered was the five-year period from 2011 to 2015. The one-year period in 2011 was used as a run-up period to transition from the steady state (background analysis) to the non-steady state (current situation replication analysis).

A non-steady state analysis was performed on equilibrium data given the average climatic conditions of the target area. Various quantities that represent the results of the reproduction of the water circulation in the target area and the water source characteristics of the area were extracted from the calculation results.

The calculation conditions were as follows.

For the rainfall, the background analysis used constant rainfall without considering time variation. For the spatial distribution in the target area, multi-year average daily rainfall at a horizontal resolution of 1 km was used from the mesh normal values 2010. The calculation is based on the effective rainfall obtained by subtracting the evapotranspiration (described below) from the rainfall, and assigning it to the surface grid. For the current situation replication analysis, radar AMeDAS analysis rainfall was aggregated into daily data.

Regarding evapotranspiration, for background analysis, the Harmon method (Harmon W.R., 1961) was used to obtain possible evapotranspiration. The calculation of possible evapotranspiration according to the Harmon method follows the following equation. In the following formulas, "^" is a symbol indicating an exponent and "_" is a symbol indicating a subscript.

$$Ep = 0.14 \times (D\_0)^2 \times Pt$$

Here, "Ep" is the average daily evapotranspiration (mm/d), "D_0" is the possible sunshine duration normalized to 1 for 12 hours, and "Pt" is the saturated absolute humidity (g/m^3). The sunshine duration was calculated using the correction value of the length of the day against the north latitude (Groundwater Handbook Editorial Committee, 1979).

The effects of snow accumulation and snow melt were not considered in either the background analysis or the current situation replication analysis.

Regarding vegetation and so on, in the background analysis, the effect of rainfall interception by vegetation was not considered. In the current situation replication analysis, the process of rainfall interception in the canopy and on the forest floor was taken into account. It was envisaged that the amount of rainfall outside the forest was intercepted and stored in the tree canopy and the forest floor, and the amount of water stored in each flowed out of the system at evapotranspiration obtained using the single-layer heat balance method. It was envisaged that only the remaining amount of water passed through the tree canopy and reached the forest floor, and a portion thereof passed through the forest floor and reached the ground surface. Regarding each of the tree canopy and forest floor, the amount of storage and coverage corresponding to land use and vegetation classification were given as parameters. This study was based on the existing vegetation map of the Basic Survey for Nature Conservation, and the vegetation distribution was reclassified into six categories: grassland and bare land, city area, deciduous broad-leaved trees, evergreen broad-leaved trees, coniferous forest, and bamboo forest.

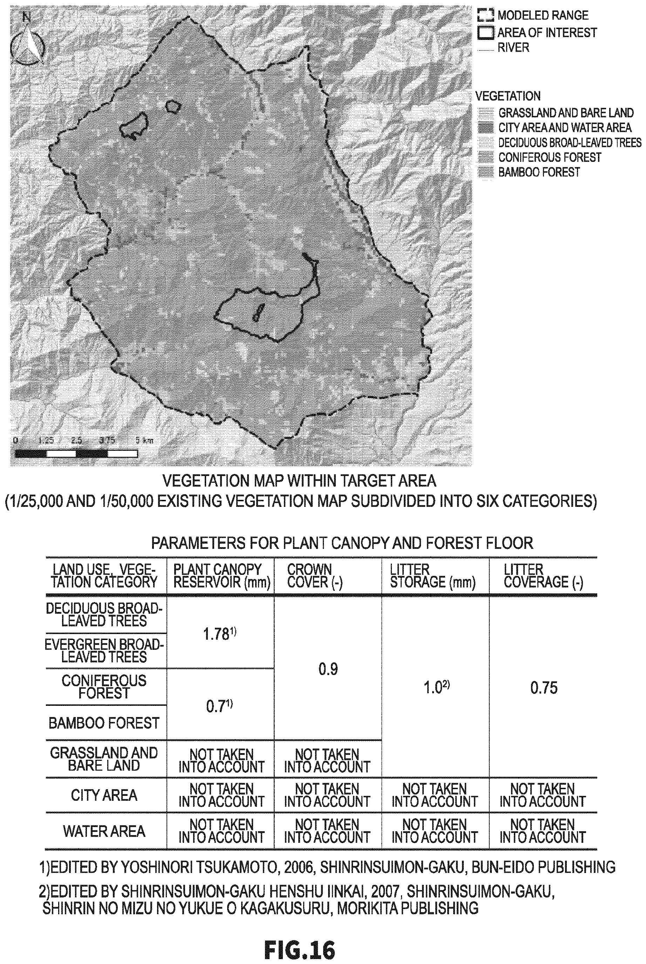

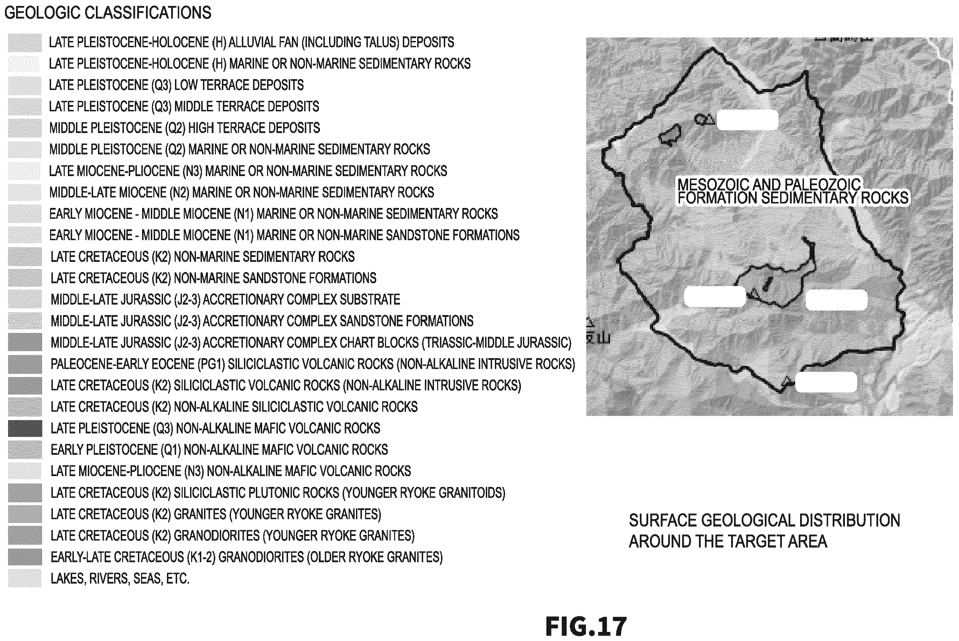

FIG. 16 is a diagram illustrating vegetation distribution according to Example 1. FIG. 17 is a diagram illustrating geologic classification according to the present example.

The sensitivity analysis was performed as follows. The parameters that can affect the recharge amount include boundary conditions such as effective rainfall and internal conditions such as hydraulic conductivity. The sensitivity analysis is a steady state calculation, and therefore parameters that affect only non-steady state calculations (such as the porosity) were excluded from the analysis. In addition, parameters with very small parameter ranges (such as the water density) were excluded. The parameters actually used for the sensitivity analysis were effective the rainfall, the roughness coefficient, and the hydraulic conductivity. The possible ranges of these parameters were assumed to be caused by, for example, errors that occurred when rainfall was measured, or the range of hydraulic conductivity set in the geological classification. Therefore, the range of boundary conditions and internal conditions were narrowed down by combining past field data (rainfall observation, field survey, permeability test, hydrological observation, etc.), literature values, analysis results, and so on. Note that a wider range of parameters is expected to result in a larger range of recharge amount, and therefore it is desirable that the range of parameters is narrowed down to some extent while keeping a wide enough range.

The range of effective rainfall was as follows. A specific discharge was calculated from the river discharge observation data regarding an area around the target area, and it was confirmed that the effective rainfall around the target area estimated from the mesh normal values 2010 using the Harmon method generally corresponded to the specific discharge, and the effective rainfall range was then calculated from the difference between these two. Specifically, first, regarding river discharge locations in the vicinity of the target area, locations that were thought to receive almost all of the effective rainfall in their catchment area and that would last for many years were selected based on topography, geology, and other elements. The average specific discharge was calculated for each selected location, and the range was provided, assuming the accuracy of the river discharge to be plus or minus 10%. This was based on the knowledge: "Plot the discharge value on the existing water level discharge curve chart and check whether the value is far from the curve (approximately 10% as a guideline). If the value is far away, investigate the cause."

(a description in Hydrological Observation ver. 2002 (Public Works Research Institute), chapter 5, discharge data). The largest difference in effective rainfall estimated from the range of specific discharge obtained at each location and the mesh normal values 2010 was taken as the range of average effective rainfall in the vicinity of the target area.

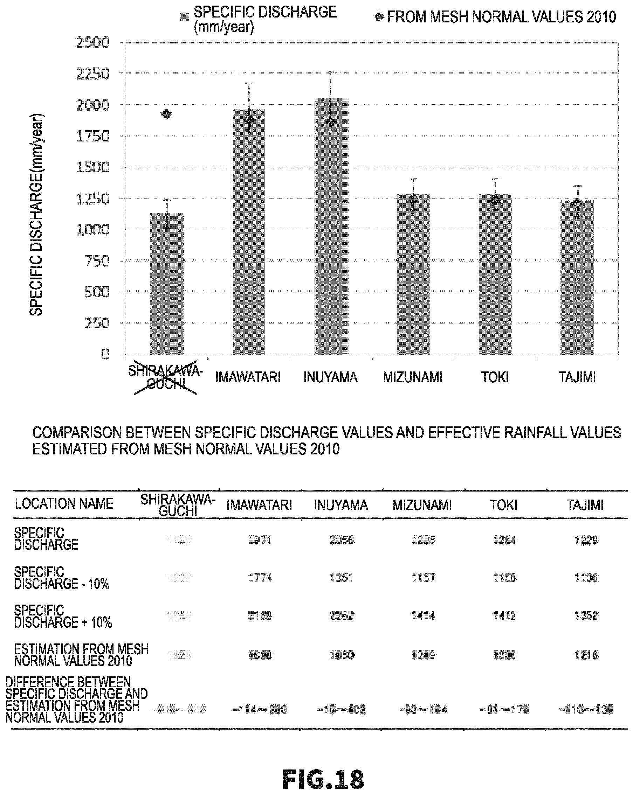

FIG. 18 is a diagram showing a comparison between specific discharge values and effective rainfall values estimated from mesh normal values 2010 according to the present example.

In FIG. 18, "SHIRAKAWAGUCHI" was excluded from the aggregation because it suggested the influence of water intake at Nagura dam. The differences between the finally obtained specific discharge values and the effective rainfall values estimated from the mesh normal values 2010 ranged from minus 114 mm per year to 402 mm per year.

The range of the internal conditions was set as follows. In the quantitative evaluation in this example, reproducibility in steady state calculation was checked and the parameter set was narrowed down. Since Reproducibility in non-steady conditions is not considered, parameters such as porosity related to storage properties are not considered. Therefore, the target parameters of the internal conditions are the roughness coefficient and the hydraulic conductivity. The roughness coefficient was set in relation to land use in the base case, and was also set in relation to land use in the present example. The possible range was set for each land use based on existing literature. The hydraulic conductivity was set in relation to the stratum division in the base case, and was also set in relation to the stratum division.

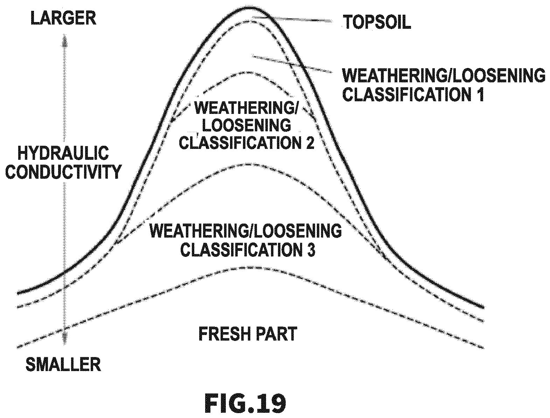

FIG. 19 is a diagram showing the concept of hydraulic conductivity setting according to the present example.

Field data such as permeability test data was not collected for many geological divisions such as the mountainous area including the area of interest (the area surrounded by the solid line in FIG. 16). Therefore, as shown in FIG. 19, all models were basically set so that the hydraulic conductivity decreased from the surface layer to the deeper layer. This relative structure was maintained if the hydraulic conductivity is approximately within the range of plus or minus one order. For this reason, the range was basically set with the set value plus one order as the maximum value and the set value minus one order as the minimum value. However, if the value of the set value plus one order was considered too large, the maximum value was set to the set value and the minimum value was set to the set value minus two orders. On the other hand, if the value of the set value minus one order was considered too small, the maximum value was set to the set value plus two orders and the minimum value was set to the set value.

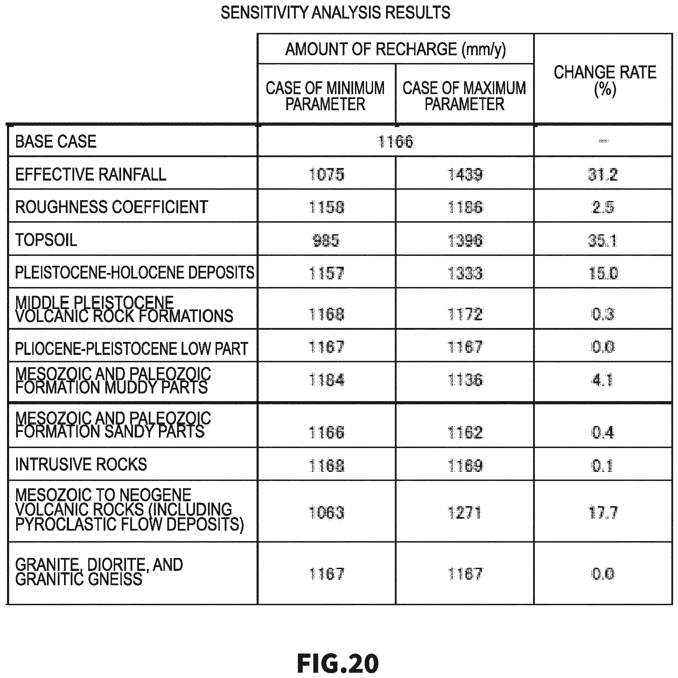

FIG. 20 is a diagram illustrating results of sensitivity analysis according to the present example.

Sensitivity analysis results were obtained as shown in FIG. 20. In the case where geological features such as weathered and loosened zones and a fresh part were set, these features were assigned to the maximum or minimum value at the same time, and sensitivity analysis was performed. In addition, regarding the roughness coefficient, all land uses were assigned to the maximum or minimum value at the same time, and sensitivity analysis was performed. Parameters determined to be sensitive to recharge in the area of interest are as follows.

Effective rainfall, roughness coefficient, the hydraulic conductivity of topsoil, the hydraulic conductivity of late Pleistocene and Holocene deposits, the hydraulic conductivity of muddy parts of Mesozoic and Paleozoic formations, and the hydraulic conductivity of Mesozoic to Neogene volcanic rocks (including pyroclastic flow deposits).

It was found that the change in effective rainfall is an important indicator that changes the amount of recharge of groundwater by 31.2 percent. Effective rainfall was taken as an important indicator (high-impact parameter) used to manage water resources.

Based on the above results, measures to increase effective rainfall were taken as management measures. Here, thinning of densely populated trees was carried out.

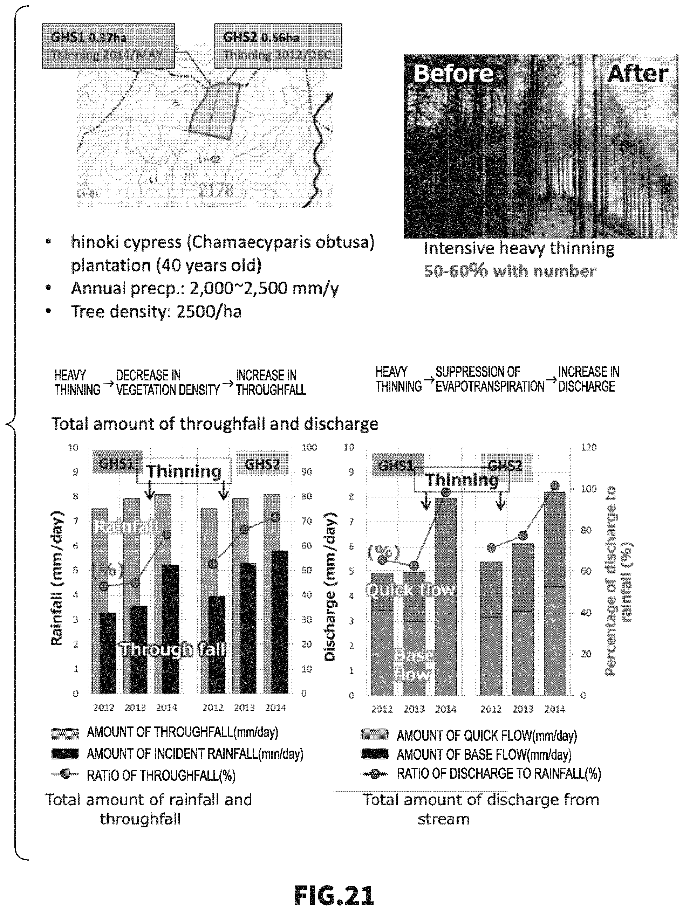

FIG. 21 is a diagram illustrating effects of a management measure according to the present example.

The results of confirming the effects of the management measures are as follows. It was confirmed that, in GHS2, where dense trees were thinned in December 2012, the ratio of the amount of rainfall in the forest to the amount of rainfall outside the forest and the effective rainfall increased in 2013 and later, and in GHS2, where dense trees were thinned in May 2014, the ratio and the effective rainfall increased in 2014. In addition, it was confirmed that the amount of base flow tended to increase with similar timing. This suggests increased recharge.

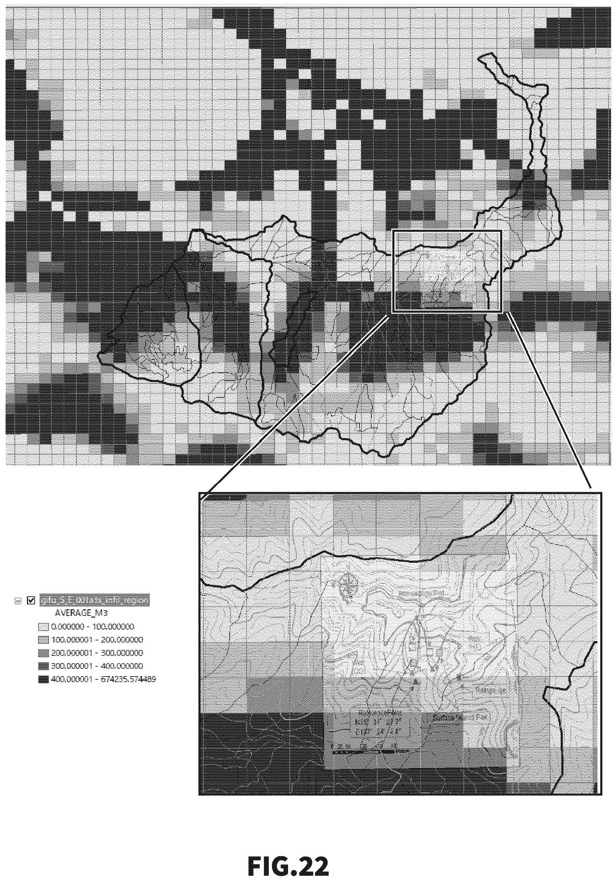

FIG. 22 is a diagram illustrating an example of display of location information according to the present example.

In FIG. 22, the relative amount of recharge at each of the locations in the divided grids is shown in a distribution map. Locations with a larger amount of recharge are shown in darker colors. Each location is superimposed on a map showing the shape of the predetermined area.

Example 2

Hereinafter, one example of the present invention will be described in detail based on an experimental example, but the present invention is not limited thereto.

In Example 2, a distributed water circulation model that reproduces the state of circulation of water resources in a spatial unit with a certain range of spatial extent was created. Attention is paid to the amount of recharge of groundwater as a water resource, and the reproducibility of the water balance was confirmed by the coincidence of spring locations.

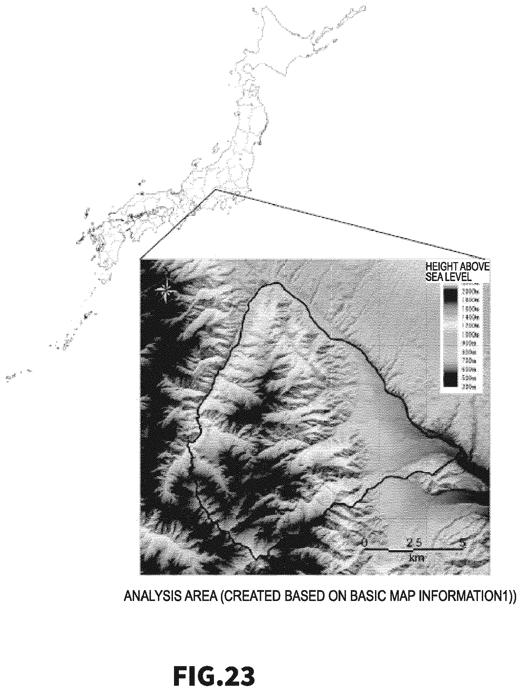

FIG. 23 is a diagram showing a predetermined target area according to Example 2.

In Example 2, the Jingu River flowing through Hokuto City, Yamanashi Prefecture was set at the center, and in consideration of the possibility of water coming in and out of the adjacent watersheds, an area of approximately 100 square kilometers including the Nakano River, the Kuro River, the Nagare River, the Matsuyamazawa River, the Tazawa River, and the Ojira River, which flow into the Kamanashi River watershed of the Fuji River system from the right bank, was set as the target area.

An integrated watershed modeling system "GETFLOWS (registered trademark)" was used to reproduce the water circulation process. "GETFLOWS (registered trademark)" is an integrated water circulation simulation system that formulates the water circulation system on a land area as a multi-phase, multicomponent fluid system, and can handle both above-ground and underground water flows as an integrated system. The analysis results of the watershed model were compared with the measured values of river discharge, groundwater level, water quality, age, and so on, or the states of a groundwater flow such as recharge and seepage estimated from the measured values. Thus, an attempt was made to identify the hydrological circulation process of the entire watershed.

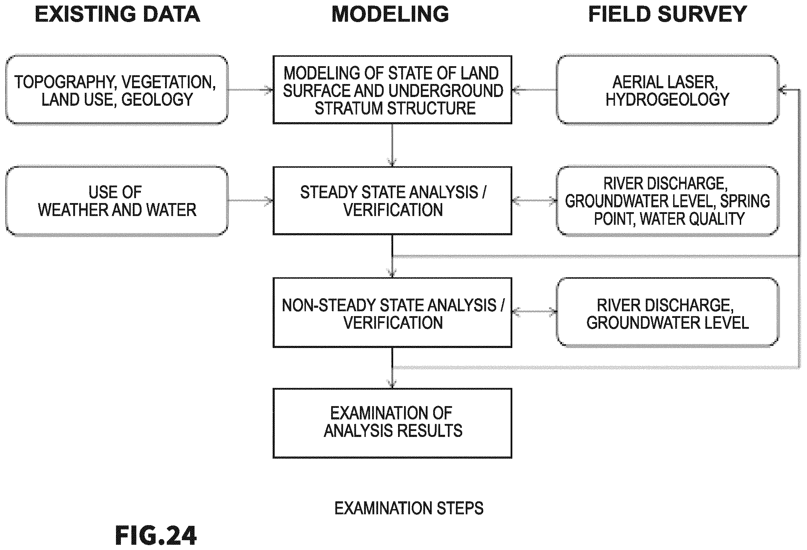

FIG. 24 is a diagram showing main examination steps according to the present example.

The land surface and the hydrogeological structure were modeled. The goal was to identify the water circulation process with high accuracy by interlocking field surveys and watershed modeling reproduction with each other. The computational grid in the target area was created with a horizontal resolution of 30 m to 130 m and a vertical resolution of 0.05 m to 1,000 m, considering the coverage of river channels and topography. The total number of grids in the model was 661,152, which was divided into 193 in the east-west direction, 168 in the north-south direction, and 24 in the depth direction. The temporal resolution of the external force data regarding weather and water use used for the non-steady analysis was 1 day, and the period from 2011 to 2013 was set as the reproduction target period. Aerial laser survey results (LiDAR data) were used to analyze topography and surface geology with high precision.

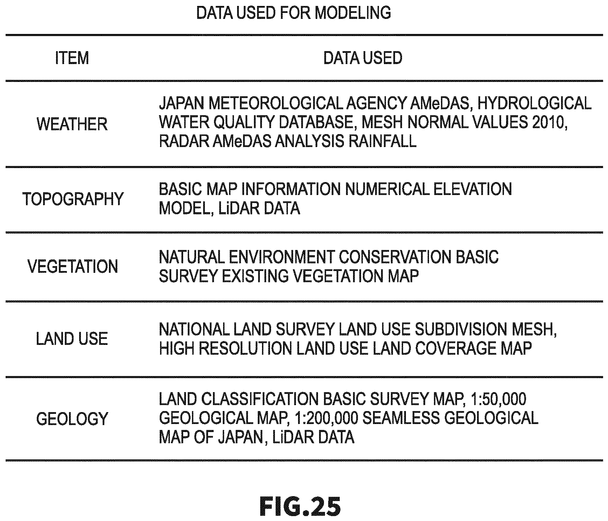

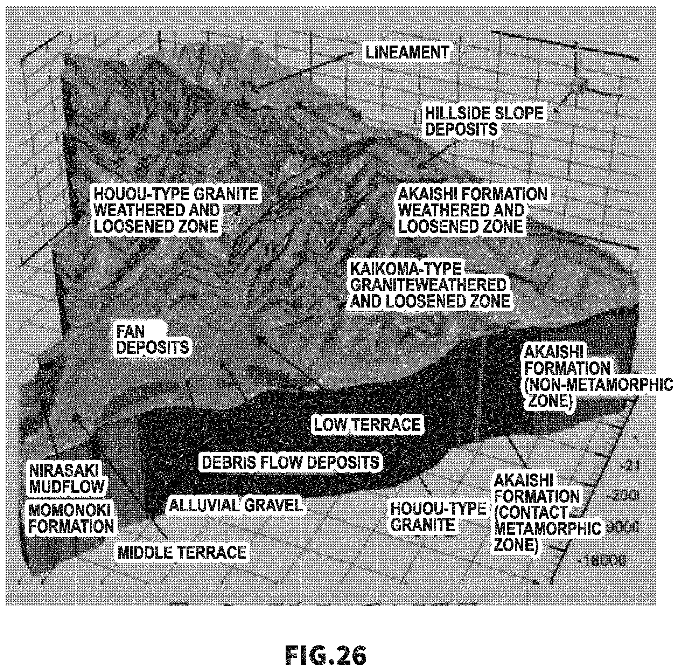

FIG. 25 is a table showing data regarding weather, topography, vegetation, land use, and geology used in modeling and calculation according to the present example. FIG. 26 is a bird's-eye view of a built 3D numerical model.

The amount of recharge of groundwater was estimated. The amount of recharge of groundwater, which is an input to groundwater, is narrowly defined as the supply of water to the groundwater surface. From the viewpoint of a balanced water balance, the amount of recharge of groundwater from rainfall is considered to be approximately equal to the amount of runoff from groundwater to rivers, and in Japan, the amount of groundwater runoff is approximately equal to the river drought flow. However, drought discharge does not include the component that leaves the target watershed as groundwater, which introduces errors when estimating the net amount of recharge of groundwater, which changes daily. In Example 2, the amount of recharge of groundwater, which is the amount of water supplied to the groundwater surface, was directly evaluated by estimating the annual total flux passing downward through the free groundwater surface, which changes from time to time on the model. At the same time, the annual integrated value of the flux that passes downward through the bottom surfaces of the meshes reproduced as the topsoil layer in the three-dimensional model was estimated and the two annual total fluxes were compared with each other.

The verification results were as follows. Using the results of the steady state analysis with the built model, the accuracy of reproducing the static water level of the surrounding groundwater measured at multiple locations was verified. As a result, the static water level was successfully reproduced within a plus or minus 5 m range at 26 of the 41 locations and within a plus or minus 10 m range at 36 of the 41 locations. Regarding this reproduction results, the Nash-Sutcliffe Model Efficiency, which indicates the degree of agreement between the observation value and the calculation value, was 0.92.

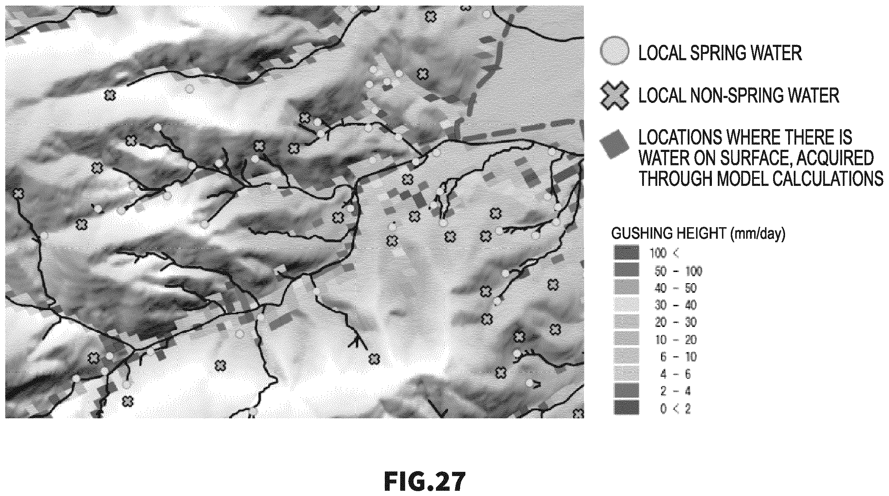

FIG. 27 is a diagram illustrating positions of springs according to the present example.

In FIG. 27, it was confirmed that the positions of springs were successfully reproduced.

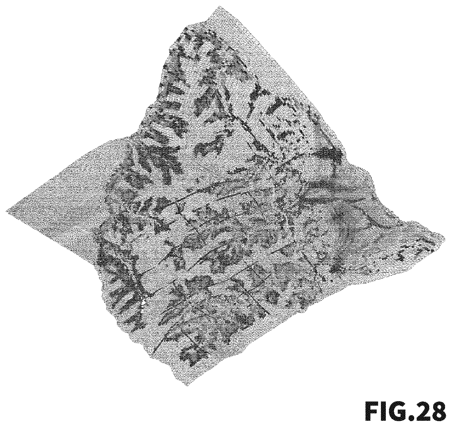

FIG. 28 is a diagram showing a spatial distribution of the amounts of recharge according to the present example.

In FIG. 28, the relative amount of recharge at each of the locations in the divided grids is shown in a distribution map in a three-dimensional shape. Locations with a larger amount of recharge are shown in darker colors.

Example 3

Hereinafter, one example of the present invention will be described in detail based on an experimental example, but the present invention is not limited thereto.

Example 3 shows that the result of the evaluation regarding the uncertainty of the amount of recharge of groundwater can be obtained by performing parameter screening evaluation and quantitative evaluation on the amount of recharge of groundwater calculated using a water circulation model that reproduces the state of circulation of water resources in a spatial unit with a certain range of spatial extent.

Experimental Method

As a water circulation model that reproduces the circulation of water resources in a spatial unit with a certain spatial extent, the watershed model of Hakushu-cho, Hokuto City, Yamanashi Prefecture (hereinafter referred to as the Southern Japanese Alps water circulation model) was used.

The Southern Japanese Alps water circulation model is constituted by the following thirty-five parameters, namely, rainfall, evapotranspiration, temperature, wind speed, sunshine duration, relative humidity, albedo, bulk transport coefficient, equivalent roughness coefficient, capillary pressure, relative permeability, the hydraulic conductivity of developed black soil, the hydraulic conductivity of topsoil (decomposed granite soil), the hydraulic conductivity of hillside slope deposits, the hydraulic conductivity of alluvial gravel, the hydraulic conductivity of mudslide deposits, the hydraulic conductivity of low terrace deposits (branch rivers of Jingu River, etc.), the hydraulic conductivity of low terrace deposits (Kamanashi River main stream), the hydraulic conductivity of fan deposits, the hydraulic conductivity of middle terrace deposits, the hydraulic conductivity of Nirasaki mudflow deposits, the hydraulic conductivity of the Momonoki formation group, the hydraulic conductivity of the Houou-type granite (weathered and loosened zone), the hydraulic conductivity of the Houou-type granite (fresh part, low permeability part), the hydraulic conductivity of the Houou-type granite (fresh part, non-permeable part), the hydraulic conductivity of the Kaikoma-type granite (weathered and loosened zone), the hydraulic conductivity of the Kaikoma-type granite (fresh part), the hydraulic conductivity of the Houou-type and Kaikoma-type granite alteration part (weathered and loosened zone), the hydraulic conductivity of the Houou-type and Kaikoma-type granite alteration part (fresh part), the hydraulic conductivity of Kaikoma-type granite (weathered and loosened zone), the hydraulic conductivity of Kaikoma-type granite (fresh part), the hydraulic conductivity of Akaishi formation group (weathered and loosened zone), the hydraulic conductivity of Akaishi formation group (fresh part), the hydraulic conductivity of lineament (shallow part), and the hydraulic conductivity of lineament (deep part). When performing quantitative evaluation with this model, even assuming that the number of changes per parameter is 10, calculations of 10 to the 35th power are required. Therefore, quantitative evaluation is not realistic.

Therefore, with the Southern Japanese Alps water circulation model, screening was performed on the large number of parameters using a sensitivity analysis. A possible range was set for each parameter, and calculations were performed using the maximum and minimum values of the range to evaluate changes in the amount of recharge.

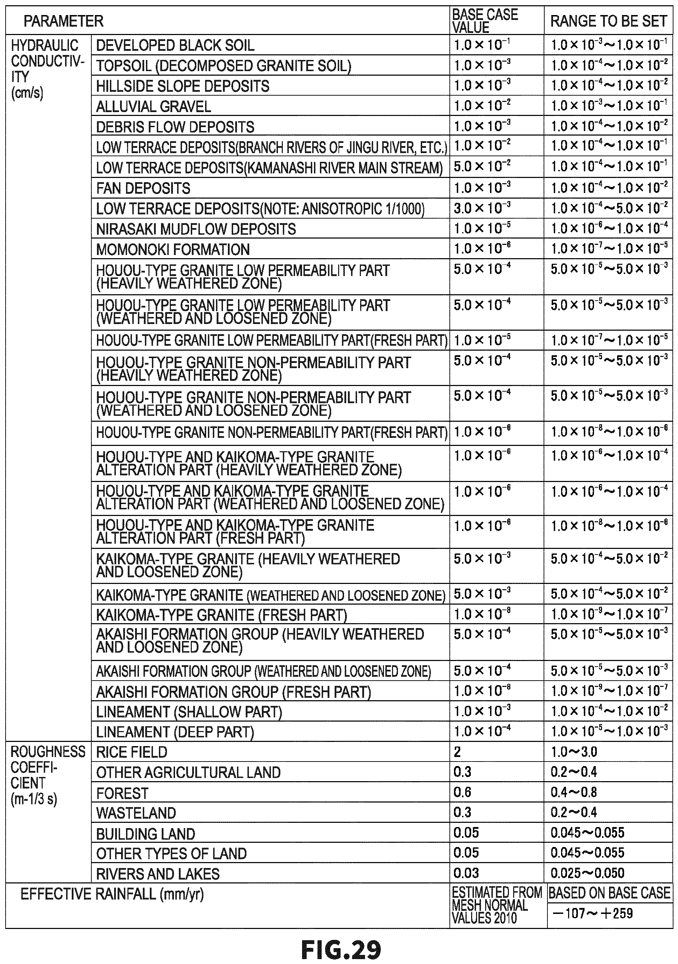

FIG. 29 is a table showing parameters subjected to a sensitivity analysis and the respective possible ranges of the parameters according to Example 3.

As shown in FIG. 29, if the range of the amount of recharge calculated using the maximum and minimum values of a parameter with respect to the amount of recharge calculated using the Southern Japanese Alps water circulation model is 1% or more, the parameter is determined as being sensitive (a high-impact parameter).

Thereafter, regarding each of the parameters determined to be sensitive through the sensitivity analysis, calculations were performed with values randomly assigned about 100 times, using the Latin hypercube sampling method was used, and the range of possible values that can reproduced the observation values was examined.

Experimental Results

In the Southern Japanese Alps water circulation model, the sensitivity analysis revealed that the following eight parameters of the thirty-five parameters are sensitive to the amount of recharge of groundwater.

Effective rainfall; the hydraulic conductivity of topsoil (decomposed granite soil), the hydraulic conductivity of alluvial gravel, the hydraulic conductivity of hillside slope deposits, the hydraulic conductivity of lineament, the hydraulic conductivity the low permeability part of Houou-type granite, the hydraulic conductivity of the non-permeable part of Houou-type granite, and the hydraulic conductivity of Kaikoma-type granite.

Quantitative evaluations were performed on these eight parameters using the Latin hypercube sampling method. The number of times sampling was performed is 100. The reproducibility in the target spatial unit of the water circulation model was checked for each individual water circulation model calculated with the group of sampled parameters, using the river discharge and the locations of springs as indicators. As a result, nineteen models were extracted as models with confirmed reproducibility. The average, standard deviation, maximum value, and minimum value of the amounts of recharge of groundwater calculated through the water cycle models in the nineteen cases were respectively 1798 mm, 235 mm, 2080 mm, and 1208 mm, and thus sufficient results for consideration of uncertainty were acquired.

**Claims**

1. An information processing apparatus comprising:

a calculation unit that acquires, based on values respectively applied to two or more parameters related to a state of circulation of water resources in a predetermined area, water balance calculation values regarding a balance of the water resources in the predetermined area; and
an output unit that outputs information regarding the state of circulation of the water resources in the predetermined area, which is based on results of the acquisition of the water balance calculation values respectively corresponding to two or more parameter value groups in which values of at least one of the parameters are different from each other.

2. The information processing apparatus according to claim 1, further comprising

an extraction unit that extracts high-impact parameters that have a larger influence on the water balance calculation values as a larger number of predetermined conditions are satisfied, by causing the calculation unit to acquire the water balance calculation values while changing the value of each parameter and thereby performing a sensitivity analysis regarding an influence of each parameter on the water balance calculation values,

wherein the output unit outputs identifiers that identify the high-impact parameters extracted by the extraction unit.

3. The information processing apparatus according to claim 2,

wherein the extraction unit ranks the extracted high-impact parameters in descending order of influence of the extracted high-impact parameters on the water balance calculation values, and the output unit outputs the identifiers according to results of the ranking.

4. The information processing apparatus according to claim 2,
wherein the extraction unit includes:

a parameter setting unit that acquires observation data regarding one or more parameters and the balance of the water resources, and sets the values of the parameters corresponding to the acquired observation data and the values of the other parameters so as to correspond to the observation data regarding the balance of the water resources acquired by the water balance calculation values; and
an after-change calculation unit that acquires, for each parameter, an after-change calculation value related to the balance of the water resources, after changing the value of the parameter set by the parameter setting unit, and extracts the high-impact parameters based on the after-change calculation value of each parameter calculated by the after-change calculation unit.

5. The information processing apparatus according to claim 4,

wherein the after-change calculation unit acquires the after-change calculation values by changing the value of each parameter by a predetermined rate, and
for each parameter, the extraction unit extracts the parameter as a high-impact parameter when a difference or a ratio between a water balance calculation value acquired using the value set by the parameter setting unit and the after-change calculation value is equal to or greater than a predetermined threshold value.

6. The information processing apparatus according to claim 4,

wherein, for each parameter, the after-change calculation unit acquires two after-change calculation values by changing the value of the parameter to a maximum value and a minimum value of a possible range thereof, and
for each parameter, the extraction unit extracts the parameter as a high-impact parameter when a difference or a ratio between the two after-change calculation values is equal to or greater than a predetermined threshold value.

7. The information processing apparatus according to claim 2,
wherein the extraction unit extracts the high-impact parameters from parameters determined as having a property of being changeable in response to worker activities, of the two or more parameters.

8. The information processing apparatus according to claim 7,
wherein the extraction unit is configured to determine parameters related to elements located above a point at a predetermined depth from a ground surface as parameters that have a property of being changeable in response to the worker activities.

9. The information processing apparatus according to claim 7, further comprising

an acceptance unit that accepts, in association with each parameter, a specifying operation that specifies whether or not the parameter can be a target of the worker activities in the predetermined area, from a user,
wherein the extraction unit is configured to determine parameters specified through a specifying operation accepted by the acceptance unit, as parameters that can be the target of the worker activities, as parameters that have a property of being changeable in response to the worker activities.

10. The information processing apparatus according to claim 2,

wherein the calculation unit acquires the water balance calculation values, using a distributed water circulation model that is formed using a parameter group that includes the two or more parameters by modeling the state of circulation of the water resources in the predetermined area.

11. The information processing apparatus according to claim 1, further comprising

a formation unit that forms information regarding the state of circulation of the water resources in the predetermined area,
wherein the acquisition unit is configured to, by using a distributed water circulation model formed by modeling the state of circulation of the water resources in the predetermined area, using: a large number of meshes formed by dividing the predetermined area into a grid pattern, each mesh being associated with position information that specifies a position thereof; and a parameter group that includes two or more parameters applied to each mesh, acquire the water balance calculation values regarding the balance of the water resources corresponding to the meshes,
the formation unit forms information regarding the state of circulation of the water resources at each location in the predetermined area, based on the water balance calculation values corresponding to the meshes acquired by the calculation unit and the position information corresponding to the meshes, and
the output unit outputs information regarding the state of circulation of the water resources at each location in the predetermined area formed by the formation unit.

12. The information processing apparatus according to claim 11,
wherein the information regarding the state of circulation of the water resources at each location in the predetermined area includes information regarding a result of a comparison between a value of a predetermined parameter indicating the state of circulation of the water resources at each location, and a predetermined threshold value.

13. The information processing apparatus according to claim 12,
wherein the predetermined threshold value corresponds to an average of values of the predetermined parameter at the locations.

14. The information processing apparatus according to claim 11,
wherein the information regarding the state of circulation of the water resources at each location in the predetermined area includes information regarding a result of a comparison between a value of effective rainfall at each location and effective rainfall per unit area in the predetermined area.

15. The information processing apparatus according to claim 11,
wherein the information regarding the state of circulation of the water resources at each location in the predetermined area includes information regarding a result of a comparison between a value of a river discharge at each location and a river discharge per unit watershed of the predetermined area.

16. The information processing apparatus according to claim 11, further comprising

a geographic information acquisition unit that acquires geographic information that is used to visually display a shape of the predetermined area,
wherein the output unit visually outputs information regarding the state of circulation of the water resources at each location in the predetermined area together with the shape of the predetermined area, based on the geographic information.

17. The information processing apparatus according to claim 11,
wherein the formation unit acquires observation data regarding the balance of the water resources corresponding to one or more meshes, and forms information regarding the state of circulation of the water resources at each location in the predetermined area, based on the water balance calculation values acquired by the calculation unit, the position information, and the observation data.

18. The information processing apparatus according to claim 17,
wherein the information regarding the state of circulation of the water resources at each location in the predetermined area includes a value of a predetermined parameter calculated by the formation unit based on the water balance calculation values, and a value that is based on the observation data, of the predetermined parameter.

19. The information processing apparatus according to claim 1,

wherein the calculation unit is configured to calculate the water balance calculation values, using a distributed water circulation model that is formed using a parameter group that includes the two or more parameters by modeling the state of circulation of the water resources in the predetermined area, based on values applied to the parameters, and

the information processing apparatus further comprises:

a sample creation unit that creates two or more sample value groups including sample values within a possible range of each parameter, such that sample values of at least one parameter are different from each other;

a sample calculation unit that acquires sample calculation values related to the balance of the water resources, by applying each of the two or more sample value groups created by the sample creation unit to the distributed water circulation model; and

an uncertainty evaluation unit that acquires information regarding uncertainty of the water balance calculation values acquired using the distributed water circulation model, based on the sample calculation values corresponding to the sample value groups acquired by the sample calculation unit.

20. The information processing apparatus according to claim 19, further comprising

an extraction unit that performs a sensitivity analysis regarding an influence of the parameters on the water balance calculation values, to extract high-impact parameters that have a large influence on the water balance calculation values,

wherein the sample creation unit creates the two or more sample value groups such that sample values of at least one high-impact parameter of the high-impact parameters extracted by the extraction unit are different from each other.

21. The information processing apparatus according to claim 19,

wherein the uncertainty evaluation unit acquires observation data regarding one or more parameters and the balance of water resources, checks the sample value groups and the sample calculation values corresponding thereto against observation data, to confirm that reproducibility is ensured, and acquires values related to variation of the sample calculation values acquired through statistical processing performed using the sample calculation values of which reproducibility has been confirmed to be ensured, as the information regarding uncertainty.

22. The information processing apparatus according to claim 19, further comprising

a formation unit that forms output data by associating the water balance calculation values acquired by the calculation unit and the information regarding uncertainty acquired by the uncertainty evaluation unit with each other.

23. The information processing apparatus according to claim 1,

wherein the water balance calculation values relate to a flow rate or an amount of storage of the water resources in the predetermined area, or an amount of change in each.

24. The information processing apparatus according to claim 1,

wherein the water balance calculation values relate to a flow rate or an amount of storage of groundwater in the predetermined area, or the amount of change in each.

25. The information processing apparatus according to claim 1,

wherein the water balance calculation values relate to an amount of recharge of groundwater in the predetermined area.

26. A water resource management method for managing water resources in a predetermined area, comprising:

a step of acquiring information regarding circulation of water resources in a predetermined area, output by the output unit of the information processing apparatus according to claim 1 in which the calculation unit is configured to acquire water balance calculation values regarding the balance of the water resources in the predetermined area; and

a step of changing, in the predetermined area, a state of a dominant element corresponding to the acquired information regarding the circulation of the water resources in the predetermined area.

27. An information processing method that is realized using a calculation unit and an output unit, comprising:

a calculation step of acquiring, based on values respectively applied to two or more parameters related to a state of circulation of water resources in a predetermined area, water balance calculation values regarding a balance of the water resources in the predetermined area; and

an output step of outputting information regarding the state of circulation of the water resources in the predetermined area, which is based on results of the acquisition of the water balance calculation values respectively corresponding to two or more parameter value groups in which values of at least one of the parameters are different from each other.

28. A recording medium having recorded thereon a program for enabling a processor of an information processing apparatus to function as:

a calculation unit that acquires, based on values respectively applied to two or more parameters related to a state of circulation of water resources in a predetermined area, water balance calculation values regarding a balance of the water resources in the predetermined area; and
an output unit that outputs information regarding the state of circulation of the water resources in the predetermined area, which is based on results of the acquisition of the water balance calculation values respectively corresponding to two or more parameter value groups in which values of at least one parameter of the parameters are different from each other.

EACH MESH

| ELEMENT | PARAMETER |
|---|---|
| RAINFALL<br>TEMPERATURE<br>SOLAR RADIATION<br>INTERCEPTION | EFFECTIVE RAINFALL |
| TOPSOIL<br>DEPOSIT | ROUGHNESS COEFFICIENT<br>HYDRAULIC CONDUCTIVITY |
| PERMEABLE LAYER<br>IMPERMEABLE LAYER<br>LOCAL STRUCTURE | HYDRAULIC CONDUCTIVITY |
| ⋮ | ⋮ |

FIG.1

START

DETERMINE TARGET AREA — S1

COLLECT INFORMATION REGARDING TARGET AREA SUCH AS TOPOGRAPHY, GEOLOGY, VEGETATION, ETC. — S2

CREATE WATER CIRCULATION MODEL BASED ON COLLECTED INFORMATION — S3

INPUT METEOROLOGICAL EXTERNAL FORCE DATA TO CALCULATE WATER BALANCE — S4

CHECK REPRODUCIBILITY OF MODEL, USING OBSERVATION DATA, AND IMPROVE REPRODUCIBILITY BY REPEATING INFORMATION COLLECTION AND MODEL ADJUSTMENT — S5

CALCULATE WATER BALANCE IN TARGET AREA — S6

INPUT PARAMETER VALUES FOR PREDETERMINED PERIOD TO ACQUIRE INTEGRATED WATER BALANCE — S7

USE INFORMATION REGARDING CALCULATED WATER BALANCE — S8

END

**FIG.2**

1

INFORMATION PROCESSING APPARATUS

110

STORAGE UNIT

111 — MODEL INFORMATION STORAGE UNIT

113 — OBSERVATION DATA STORAGE UNIT

117 — PROPERTY INFORMATION STORAGE UNIT

130 — ACCEPTANCE UNIT

160 — OUTPUT UNIT

PROCESSING UNIT — 140

EXTRACTION UNIT — 141

PARAMETER SETTING UNIT — 1411

AFTER-CHANGE CALCULATION UNIT — 1412

RANKING SETTING UNIT — 1415

CALCULATION UNIT — 151

FORMATION UNIT — 155

**FIG.3**

FIG.4

**FIG.5**

FIG.6

**FIG.7**

START

ACQUIRE WATER BALANCE CALCULATION
VALUE OF EACH MESH, USING
DISTRIBUTED WATER CIRCULATION MODEL — S211

FORM LOCATION INFORMATION — S212

ACQUIRE GEOGRAPHIC INFORMATION — S213

OUTPUT LOCATION INFORMATION TOGETHER
WITH GEOGRAPHIC INFORMATION — S214

END

**FIG.8**

START

FORM DISTRIBUTED
WATER CIRCULATION MODEL — S251

ACQUIRE
WATER BALANCE CALCULATION VALUES — S252

OUTPUT
COMPARISON RESULT AT EACH LOCATION — S253

CHANGE STATE OF DOMINANT ELEMENTS FOR
PARTIAL AREA CORRESPONDING TO LOCATIONS
THAT SATISFY PREDETERMINED CONDITIONS — S254

CHECK EFFECT — S255

END

**FIG.9**

1

INFORMATION PROCESSING APPARATUS

310

STORAGE UNIT

111    MODEL INFORMATION
       STORAGE UNIT

113    OBSERVATION DATA
       STORAGE UNIT

315    EXTRACTION INFORMATION
       STORAGE UNIT

130    ACCEPTANCE UNIT

160    OUTPUT UNIT

PROCESSING UNIT                    340

EXTRACTION UNIT                    341

PARAMETER
SETTING UNIT                       1411

AFTER-CHANGE
CALCULATION UNIT                   1412

SAMPLE CREATION UNIT               343

SAMPLE CALCULATION UNIT            345

UNCERTAINTY
EVALUATION UNIT                    349

CALCULATION UNIT                   351

FORMATION UNIT                     355

**FIG.10**

START

S311

SCREENING EVALUATION

S312

QUANTITATIVE EVALUATION

END

**FIG.11**

SCREENING EVALUATION

i=0 — S321

i=i+1 — S322

SELECT i$^{TH}$ PARAMETER — S323

ACQUIRE RANGE OF POSSIBLE VALUES OF PARAMETER — S324

PERFORM SENSITIVITY ANALYSIS — S325

EXTRACTION CONDITION SATISFIED? — S326

NO

YES

SET THE PARAMETER AS EXTRACTION TARGET — S327

i = NUMBER OF PARAMETERS SUBJECTED TO SENSITIVITY ANALYSIS? — S328

NO

YES

RETURN

**FIG.12**

```
         ┌────────────────────────────┐
         │   QUANTITATIVE EVALUATION   │
         └────────────────────────────┘
                       │
                       ▼
         ┌────────────────────────────┐  ⟋S331
         │      CREATE TWO OR MORE     │
         │     SAMPLE VALUE GROUPS     │
         └────────────────────────────┘
                       │
                       ▼
         ┌────────────────────────────┐  ⟋S332
         │     PERFORM ANALYSIS ON ALL OF   │
         │       SAMPLE VALUE GROUPS        │
         └────────────────────────────┘
                       │
                       ▼
         ┌────────────────────────────┐  ⟋S333
         │       CHECK WHETHER OR NOT       │
         │  REPRODUCIBILITY INDICATOR IS MET │
         └────────────────────────────┘
                       │
                       ▼
         ┌────────────────────────────┐  ⟋S334
         │ NARROW DOWN NUMBER OF SAMPLE CALCULATION │
         │ VALUES TO BE USED FOR UNCERTAINTY EVALUATION │
         └────────────────────────────┘
                       │
                       ▼
         ┌────────────────────────────┐  ⟋S335
         │ CALCULATE RANGE OF CALCULATION VALUES, USING │
         │          SAMPLE CALCULATION VALUES           │
         │ CONFIRMED TO MEET REPRODUCIBILITY INDICATOR  │
         └────────────────────────────┘
                       │
                       ▼
                 ┌──────────┐
                 │  RETURN  │
                 └──────────┘
```

**FIG.13**

**FIG.14**

**FIG.15**

EP 4 287 214 A1

VEGETATION MAP WITHIN TARGET AREA
(1/25,000 AND 1/50,000 EXISTING VEGETATION MAP SUBDIVIDED INTO SIX CATEGORIES)

PARAMETERS FOR PLANT CANOPY AND FOREST FLOOR

| LAND USE, VEGE-TATION CATEGORY | PLANT CANOPY RESERVOIR (mm) | CROWN COVER (-) | LITTER STORAGE (mm) | LITTER COVERAGE (-) |
|---|---|---|---|---|
| DECIDUOUS BROAD-LEAVED TREES | 1.78[1] | 0.9 | 1.0[2] | 0.75 |
| EVERGREEN BROAD-LEAVED TREES | | | | |
| CONIFEROUS FOREST | 0.7[1] | | | |
| BAMBOO FOREST | | | | |
| GRASSLAND AND BARE LAND | NOT TAKEN INTO ACCOUNT | NOT TAKEN INTO ACCOUNT | | |
| CITY AREA | NOT TAKEN INTO ACCOUNT | NOT TAKEN INTO ACCOUNT | NOT TAKEN INTO ACCOUNT | NOT TAKEN INTO ACCOUNT |
| WATER AREA | NOT TAKEN INTO ACCOUNT | NOT TAKEN INTO ACCOUNT | NOT TAKEN INTO ACCOUNT | NOT TAKEN INTO ACCOUNT |

1)EDITED BY YOSHINORI TSUKAMOTO, 2006, SHINRINSUIMON-GAKU, BUN-EIDO PUBLISHING

2)EDITED BY SHINRINSUIMON-GAKU HENSHU IINKAI, 2007, SHINRINSUIMON-GAKU, SHINRIN NO MIZU NO YUKUE O KAGAKUSURU, MORIKITA PUBLISHING

# FIG.16

## GEOLOGIC CLASSIFICATIONS

- LATE PLEISTOCENE-HOLOCENE (H) ALLUVIAL FAN (INCLUDING TALUS) DEPOSITS
- LATE PLEISTOCENE-HOLOCENE (H) MARINE OR NON-MARINE SEDIMENTARY ROCKS
- LATE PLEISTOCENE (Q3) LOW TERRACE DEPOSITS
- LATE PLEISTOCENE (Q3) MIDDLE TERRACE DEPOSITS
- MIDDLE PLEISTOCENE (Q2) HIGH TERRACE DEPOSITS
- MIDDLE PLEISTOCENE (Q2) MARINE OR NON-MARINE SEDIMENTARY ROCKS
- LATE MIOCENE-PLIOCENE (N3) MARINE OR NON-MARINE SEDIMENTARY ROCKS
- MIDDLE-LATE MIOCENE (N2) MARINE OR NON-MARINE SEDIMENTARY ROCKS
- EARLY MIOCENE - MIDDLE MIOCENE (N1) MARINE OR NON-MARINE SEDIMENTARY ROCKS
- EARLY MIOCENE - MIDDLE MIOCENE (N1) MARINE OR NON-MARINE SANDSTONE FORMATIONS
- LATE CRETACEOUS (K2) NON-MARINE SEDIMENTARY ROCKS
- LATE CRETACEOUS (K2) NON-MARINE SANDSTONE FORMATIONS
- MIDDLE-LATE JURASSIC (J2-3) ACCRETIONARY COMPLEX SUBSTRATE
- MIDDLE-LATE JURASSIC (J2-3) ACCRETIONARY COMPLEX SANDSTONE FORMATIONS
- MIDDLE-LATE JURASSIC (J2-3) ACCRETIONARY COMPLEX CHART BLOCKS (TRIASSIC-MIDDLE JURASSIC)
- PALEOCENE-EARLY EOCENE (PG1) SILICICLASTIC VOLCANIC ROCKS (NON-ALKALINE INTRUSIVE ROCKS)
- LATE CRETACEOUS (K2) SILICICLASTIC VOLCANIC ROCKS (NON-ALKALINE INTRUSIVE ROCKS)
- LATE CRETACEOUS (K2) NON-ALKALINE SILICICLASTIC VOLCANIC ROCKS
- LATE PLEISTOCENE (Q3) NON-ALKALINE MAFIC VOLCANIC ROCKS
- EARLY PLEISTOCENE (Q1) NON-ALKALINE MAFIC VOLCANIC ROCKS
- LATE MIOCENE-PLIOCENE (N3) NON-ALKALINE MAFIC VOLCANIC ROCKS
- LATE CRETACEOUS (K2) SILICICLASTIC PLUTONIC ROCKS (YOUNGER RYOKE GRANITOIDS)
- LATE CRETACEOUS (K2) GRANITES (YOUNGER RYOKE GRANITES)
- LATE CRETACEOUS (K2) GRANODIORITES (YOUNGER RYOKE GRANITES)
- EARLY-LATE CRETACEOUS (K1-2) GRANODIORITES (OLDER RYOKE GRANITES)
- LAKES, RIVERS, SEAS, ETC.

MESOZOIC AND PALEOZOIC FORMATION SEDIMENTARY ROCKS

SURFACE GEOLOGICAL DISTRIBUTION
AROUND THE TARGET AREA

## FIG.17

EP 4 287 214 A1

COMPARISON BETWEEN SPECIFIC DISCHARGE VALUES AND EFFECTIVE RAINFALL VALUES ESTIMATED FROM MESH NORMAL VALUES 2010

| LOCATION NAME | SHIRAKAWA-GUCHI | IMAWATARI | INUYAMA | MIZUNAMI | TOKI | TAJIMI |
|---|---|---|---|---|---|---|
| SPECIFIC DISCHARGE | | 1971 | 2055 | 1285 | 1284 | 1229 |
| SPECIFIC DISCHARGE - 10% | | 1774 | 1851 | 1157 | 1156 | 1106 |
| SPECIFIC DISCHARGE + 10% | | 2168 | 2262 | 1414 | 1412 | 1352 |
| ESTIMATION FROM MESH NORMAL VALUES 2010 | | 1888 | 1850 | 1249 | 1235 | 1216 |
| DIFFERENCE BETWEEN SPECIFIC DISCHARGE AND ESTIMATION FROM MESH NORMAL VALUES 2010 | | ~114～280 | ~10～402 | ~93～164 | ~81～176 | ~110～136 |

**FIG.18**

FIG.19

SENSITIVITY ANALYSIS RESULTS

| | AMOUNT OF RECHARGE (mm/y) | | CHANGE RATE (%) |
|---|---|---|---|
| | CASE OF MINIMUM PARAMETER | CASE OF MAXIMUM PARAMETER | |
| BASE CASE | 1166 | | --- |
| EFFECTIVE RAINFALL | 1075 | 1439 | 31.2 |
| ROUGHNESS COEFFICIENT | 1158 | 1186 | 2.5 |
| TOPSOIL | 985 | 1396 | 35.1 |
| PLEISTOCENE-HOLOCENE DEPOSITS | 1157 | 1333 | 15.0 |
| MIDDLE PLEISTOCENE VOLCANIC ROCK FORMATIONS | 1168 | 1172 | 0.3 |
| PLIOCENE-PLEISTOCENE LOW PART | 1167 | 1167 | 0.0 |
| MESOZOIC AND PALEOZOIC FORMATION MUDDY PARTS | 1184 | 1136 | 4.1 |
| MESOZOIC AND PALEOZOIC FORMATION SANDY PARTS | 1166 | 1162 | 0.4 |
| INTRUSIVE ROCKS | 1168 | 1169 | 0.1 |
| MESOZOIC TO NEOGENE VOLCANIC ROCKS (INCLUDING PYROCLASTIC FLOW DEPOSITS) | 1063 | 1271 | 17.7 |
| GRANITE, DIORITE, AND GRANITIC GNEISS | 1167 | 1167 | 0.0 |

# FIG.20

Total amount of throughfall and discharge

FIG.21

AVERAGE_M3
0.000000 - 100.000000
100.000001 - 200.000000
200.000001 - 300.000000
300.000001 - 400.000000
400.000001 - 674235.574489

**FIG.22**

ANALYSIS AREA (CREATED BASED ON BASIC MAP INFORMATION1))

# FIG.23

**EXISTING DATA**          **MODELING**          **FIELD SURVEY**

| TOPOGRAPHY, VEGETATION, LAND USE, GEOLOGY | → | MODELING OF STATE OF LAND SURFACE AND UNDERGROUND STRATUM STRUCTURE | ← | AERIAL LASER, HYDROGEOLOGY |

| USE OF WEATHER AND WATER | → | STEADY STATE ANALYSIS / VERIFICATION | ↔ | RIVER DISCHARGE, GROUNDWATER LEVEL, SPRING POINT, WATER QUALITY |

| | | NON-STEADY STATE ANALYSIS / VERIFICATION | ↔ | RIVER DISCHARGE, GROUNDWATER LEVEL |

| | | EXAMINATION OF ANALYSIS RESULTS | | |

EXAMINATION STEPS

**FIG.24**

DATA USED FOR MODELING

| ITEM | DATA USED |
|---|---|
| WEATHER | JAPAN METEOROLOGICAL AGENCY AMeDAS, HYDROLOGICAL WATER QUALITY DATABASE, MESH NORMAL VALUES 2010, RADAR AMeDAS ANALYSIS RAINFALL |
| TOPOGRAPHY | BASIC MAP INFORMATION NUMERICAL ELEVATION MODEL, LiDAR DATA |
| VEGETATION | NATURAL ENVIRONMENT CONSERVATION BASIC SURVEY EXISTING VEGETATION MAP |
| LAND USE | NATIONAL LAND SURVEY LAND USE SUBDIVISION MESH, HIGH RESOLUTION LAND USE LAND COVERAGE MAP |
| GEOLOGY | LAND CLASSIFICATION BASIC SURVEY MAP, 1:50,000 GEOLOGICAL MAP, 1:200,000 SEAMLESS GEOLOGICAL MAP OF JAPAN, LiDAR DATA |

**FIG.25**

**FIG.26**

LOCAL SPRING WATER

LOCAL NON-SPRING WATER

LOCATIONS WHERE THERE IS
WATER ON SURFACE, ACQUIRED
THROUGH MODEL CALCULATIONS

GUSHING HEIGHT (mm/day)

100 <
50 – 100
40 – 50
30 – 40
20 – 30
10 – 20
6 – 10
4 – 6
2 – 4
0 < 2

FIG.27

FIG.28

| PARAMETER | | BASE CASE VALUE | RANGE TO BE SET |
|---|---|---|---|
| HYDRAULIC CONDUCTIV- ITY (cm/s) | DEVELOPED BLACK SOIL | $1.0 \times 10^{-1}$ | $1.0 \times 10^{-3} \sim 1.0 \times 10^{-1}$ |
| | TOPSOIL (DECOMPOSED GRANITE SOIL) | $1.0 \times 10^{-3}$ | $1.0 \times 10^{-4} \sim 1.0 \times 10^{-2}$ |
| | HILLSIDE SLOPE DEPOSITS | $1.0 \times 10^{-3}$ | $1.0 \times 10^{-4} \sim 1.0 \times 10^{-2}$ |
| | ALLUVIAL GRAVEL | $1.0 \times 10^{-2}$ | $1.0 \times 10^{-3} \sim 1.0 \times 10^{-1}$ |
| | DEBRIS FLOW DEPOSITS | $1.0 \times 10^{-3}$ | $1.0 \times 10^{-4} \sim 1.0 \times 10^{-2}$ |
| | LOW TERRACE DEPOSITS(BRANCH RIVERS OF JINGU RIVER, ETC.) | $1.0 \times 10^{-2}$ | $1.0 \times 10^{-4} \sim 1.0 \times 10^{-1}$ |
| | LOW TERRACE DEPOSITS(KAMANASHI RIVER MAIN STREAM) | $5.0 \times 10^{-2}$ | $1.0 \times 10^{-4} \sim 1.0 \times 10^{-1}$ |
| | FAN DEPOSITS | $1.0 \times 10^{-3}$ | $1.0 \times 10^{-4} \sim 1.0 \times 10^{-2}$ |
| | LOW TERRACE DEPOSITS(NOTE: ANISOTROPIC 1/1000) | $3.0 \times 10^{-3}$ | $1.0 \times 10^{-4} \sim 5.0 \times 10^{-2}$ |
| | NIRASAKI MUDFLOW DEPOSITS | $1.0 \times 10^{-5}$ | $1.0 \times 10^{-6} \sim 1.0 \times 10^{-4}$ |
| | MOMONOKI FORMATION | $1.0 \times 10^{-6}$ | $1.0 \times 10^{-7} \sim 1.0 \times 10^{-5}$ |
| | HOUOU-TYPE GRANITE LOW PERMEABILITY PART (HEAVILY WEATHERED ZONE) | $5.0 \times 10^{-4}$ | $5.0 \times 10^{-5} \sim 5.0 \times 10^{-3}$ |
| | HOUOU-TYPE GRANITE LOW PERMEABILITY PART (WEATHERED AND LOOSENED ZONE) | $5.0 \times 10^{-4}$ | $5.0 \times 10^{-5} \sim 5.0 \times 10^{-3}$ |
| | HOUOU-TYPE GRANITE LOW PERMEABILITY PART(FRESH PART) | $1.0 \times 10^{-5}$ | $1.0 \times 10^{-7} \sim 1.0 \times 10^{-5}$ |
| | HOUOU-TYPE GRANITE NON-PERMEABILITY PART (HEAVILY WEATHERED ZONE) | $5.0 \times 10^{-4}$ | $5.0 \times 10^{-5} \sim 5.0 \times 10^{-3}$ |
| | HOUOU-TYPE GRANITE NON-PERMEABILITY PART (WEATHERED AND LOOSENED ZONE) | $5.0 \times 10^{-4}$ | $5.0 \times 10^{-5} \sim 5.0 \times 10^{-3}$ |
| | HOUOU-TYPE GRANITE NON-PERMEABILITY PART(FRESH PART) | $1.0 \times 10^{-6}$ | $1.0 \times 10^{-8} \sim 1.0 \times 10^{-6}$ |
| | HOUOU-TYPE AND KAIKOMA-TYPE GRANITE ALTERATION PART (HEAVILY WEATHERED ZONE) | $1.0 \times 10^{-6}$ | $1.0 \times 10^{-6} \sim 1.0 \times 10^{-4}$ |
| | HOUOU-TYPE AND KAIKOMA-TYPE GRANITE ALTERATION PART (WEATHERED AND LOOSENED ZONE) | $1.0 \times 10^{-6}$ | $1.0 \times 10^{-6} \sim 1.0 \times 10^{-4}$ |
| | HOUOU-TYPE AND KAIKOMA-TYPE GRANITE ALTERATION PART (FRESH PART) | $1.0 \times 10^{-6}$ | $1.0 \times 10^{-8} \sim 1.0 \times 10^{-6}$ |
| | KAIKOMA-TYPE GRANITE (HEAVILY WEATHERED AND LOOSENED ZONE) | $5.0 \times 10^{-3}$ | $5.0 \times 10^{-4} \sim 5.0 \times 10^{-2}$ |
| | KAIKOMA-TYPE GRANITE (WEATHERED AND LOOSENED ZONE) | $5.0 \times 10^{-3}$ | $5.0 \times 10^{-4} \sim 5.0 \times 10^{-2}$ |
| | KAIKOMA-TYPE GRANITE (FRESH PART) | $1.0 \times 10^{-8}$ | $1.0 \times 10^{-9} \sim 1.0 \times 10^{-7}$ |
| | AKAISHI FORMATION GROUP (HEAVILY WEATHERED AND LOOSENED ZONE) | $5.0 \times 10^{-4}$ | $5.0 \times 10^{-5} \sim 5.0 \times 10^{-3}$ |
| | AKAISHI FORMATION GROUP (WEATHERED AND LOOSENED ZONE) | $5.0 \times 10^{-4}$ | $5.0 \times 10^{-5} \sim 5.0 \times 10^{-3}$ |
| | AKAISHI FORMATION GROUP (FRESH PART) | $1.0 \times 10^{-8}$ | $1.0 \times 10^{-9} \sim 1.0 \times 10^{-7}$ |
| | LINEAMENT (SHALLOW PART) | $1.0 \times 10^{-3}$ | $1.0 \times 10^{-4} \sim 1.0 \times 10^{-2}$ |
| | LINEAMENT (DEEP PART) | $1.0 \times 10^{-4}$ | $1.0 \times 10^{-5} \sim 1.0 \times 10^{-3}$ |
| ROUGHNESS COEFFI- CIENT (m-1/3 s) | RICE FIELD | 2 | $1.0 \sim 3.0$ |
| | OTHER AGRICULTURAL LAND | 0.3 | $0.2 \sim 0.4$ |
| | FOREST | 0.6 | $0.4 \sim 0.8$ |
| | WASTELAND | 0.3 | $0.2 \sim 0.4$ |
| | BUILDING LAND | 0.05 | $0.045 \sim 0.055$ |
| | OTHER TYPES OF LAND | 0.05 | $0.045 \sim 0.055$ |
| | RIVERS AND LAKES | 0.03 | $0.025 \sim 0.050$ |
| EFFECTIVE RAINFALL (mm/yr) | | ESTIMATED FROM MESH NORMAL VALUES 2010 | BASED ON BASE CASE $-107 \sim +259$ |

**FIG.29**

**INTERNATIONAL SEARCH REPORT**

| International application No. |
|---|
| **PCT/JP2022/003796** |

**A. CLASSIFICATION OF SUBJECT MATTER**

*G16Z 99/00*(2019.01)i
FI: G16Z99/00

According to International Patent Classification (IPC) or to both national classification and IPC

**B. FIELDS SEARCHED**

Minimum documentation searched (classification system followed by classification symbols)

G16Z99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | 森田淳史ほか3名, "タシケント地域におけるGISを活用した水マネジメントモデルの構築", 地理情竞システム学会講演論文集, 第21巻, 一般社団法人 地理情竞システム学会, 2012 pp. 241-244, (MORITA, Atsushi et al. Research on water management in Tashkent region using GIS. Papers and proceedings of the Geographic Information Systems Association. vol. 21. Geographic Information System.) Association.) | 1, 27-28 |
| Y | | 2-26 |
| Y | 市井和仁ほか4名, "機械学習を用いた地上観測・衛星観測データの統合による広域陸域熱・水・炭素フラックスの推定", 日本リモートセンシング学会誌, 20 April 2018, vol. 38, no. 2, ISSN:0289-7911 pp. 114-120, (ICHII, Kazuhito et al. Terrestrial Energy, Water, and Carbon Flux Estimation Using Machine Learning Algorithms. Journal of The Remote Sensing Society of Japan.) | 2-26 |
| A | | 1, 27-28 |
| A | JP 2016-139166 A (GEOSPHERE ENV TECH CORP) 04 August 2016 (2016-08-04) entire text, all drawings | 1-28 |

☑ Further documents are listed in the continuation of Box C.     ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/003796** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2014/087521 A1 (TAKEMURA, Kotaro) 12 June 2014 (2014-06-12)<br>entire text, all drawings | 1-28 |
| A | US 10309812 B1 (UNIVERSITY OF WYOMING) 04 June 2019 (2019-06-04)<br>entire text, all drawings | 1-28 |
| A | JP 2011-13753 A (GEOSPHERE ENV TECH CORP) 20 January 2011 (2011-01-20)<br>entire text, all drawings | 1-28 |
| A | 株式会社日水コン, "分布型洪水予測モデル｜株式会社日水コン－潤いある未来へ",<br>[online], [retrieved on 27 April 2022], internet <URL: http://www.nissuicon.co.jp/jigyou/kasen/kouzui-yosoku/><br>entire text, all drawings, (NIHON SUIDO CONSULTANTS CO., LTD.), non-official translation (Distributed Flood Prediction Model NIHON SUIDO CONSULTANTS CO., LTD. - Water and Environmental Consultants.) | 1-28 |
| A | 登坂博行ほか3名, "地表流と地下水流を結合した3次元陸水シミュレーション手法の開発", 地下水学会, vol. 38, no. 4, 1996<br>pp. 253-267, (TOSAKA, Hiroyuki et al. Numerical Simulation of Surface-Subsurface-Coupled, 2-Phase, 3-Dimensional Fluid Behavior. Journal of Groundwater Hydrology.) | 1-28 |
| A | 森康二ほか6名, "神奈川県水源エリアの3次元水循環モデル", 神自環保セ堯10 (2013), 2013<br>pp. 215-223, (MORI, Koji et al. The 3 Dimensional Water Circulation Models for Wate Source Forest Area in Kanagawa Prefecture.), non-official translation (Bulletin of the Kanagawa Prefecture Natural Environment Conservation Center 10 (2013)) | 1-28 |

Form PCT/ISA/210 (second sheet) (January 2015)

INTERNATIONAL SEARCH REPORT
Information on patent family members

International application No.

**PCT/JP2022/003796**

| Patent document cited in search report | | | Publication date (day/month/year) | Patent family member(s) | Publication date (day/month/year) |
|---|---|---|---|---|---|
| JP | 2016-139166 | A | 04 August 2016 | (Family: none) | |
| WO | 2014/087521 | A1 | 12 June 2014 | (Family: none) | |
| US | 10309812 | B1 | 04 June 2019 | (Family: none) | |
| JP | 2011-13753 | A | 20 January 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011013753 A

**Non-patent literature cited in the description**

- Bunpugata kozui yosoku moderu. Nihon Suido Consultants Co., Ltd, 12 June 2020
- **HIROYUKI TOSAKA ; KEIJI KOJIMA ; AKIO MIKI ; TAKESHI CHINO.** Numerical Simulation of Surface-Subsurface-Coupled, 2-Phase, 3-Dimensional Fluid Behavior. *Journal of groundwater hydrology,* 1996, vol. 38 (4), 253-267
- **KOJI MORI ; KAZUHIRO TADA ; SOU SATO ; NOBUKO KAKIZAWA ; YOSHIMI UCHIYAMA ; NAOHIDE YOKOYAMA ; MASANOBU YAMANE.** The 3 Dimensional Water Circulation Models for Water Source Forest Area in Kanagawa Prefecture. *Bulletin of the Kanagawa Prefecture Natural Environment Conservation Center,* 2013, vol. 10, 215-223
- **MCDONALD ; MICHAEL G. ; ARLEN W. HARBAUGH.** A modular three-dimensional finite-difference ground-water flow model. *Techniques of water-resources investigations,* 1984
- Groundwater Handbook Editorial Committee. 1979
- Hydrological Observation. Public Works Research Institute, 2002